(19) Europäisches Patentamt / European Patent Office / Office européen des brevets

(11) EP 2 726 560 B1

(12) EUROPEAN PATENT SPECIFICATION

(45) Date of publication and mention of the grant of the patent: **01.03.2017 Bulletin 2017/09**

(21) Application number: **12805329.5**

(22) Date of filing: **29.06.2012**

(51) Int Cl.: ***C09D 5/00*** *(2006.01)*

(86) International application number: **PCT/DK2012/050223**

(87) International publication number: **WO 2013/000476 (03.01.2013 Gazette 2013/01)**

# (54) HIGH SOLIDS ANTIFOULING PAINT COMPOSITION

FÄULNISVERHINDERNDE ANSTRICHFARBENZUSAMMENSETZUNG MIT HOHEM FESTSTOFFGEHALT

COMPOSITION DE PEINTURE ANTISALISSURES À TENEUR ÉLEVÉE EN MATIÈRES SOLIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2011 EP 11172042**
**13.04.2012 EP 12164105**

(43) Date of publication of application: **07.05.2014 Bulletin 2014/19**

(73) Proprietors:
- **Hempel A/S**
  **2800 Kongens Lyngby (DK)**
- **Dai Nippon Toryo Co., Ltd.**
  **Konohana-ku**
  **Osaka 554-0012 (JP)**

(72) Inventors:
- **IWASE, Yoshiyuki**
  **Otawara-shi**
  **Tochigi 324-8516 (JP)**
- **SHIGEMATSU, Yasunobu**
  **Otawara-shi**
  **Tochigi 324-851 (JP)**
- **ASAYAMA, Yuichi**
  **Otawara-shi**
  **Tochigi 324-851 (JP)**
- **AOKI, Ryuichi**
  **Otawara-shi**
  **Tochigi 324-851 (JP)**
- **TANABE, Hiroyuki**
  **Tokyo 144-0052 (JP)**
- **CATALA, Pere**
  **E-08031 Barcelona (ES)**
- **BADIA, Antoni Sánchez**
  **E-08905 L´Hospitalet de Lobregat (Barcelona) (ES)**
- **SORIA, Maite**
  **E-08026 Barcelona (ES)**
- **PALASI, Josep**
  **E-08015 Barcelona (ES)**

(74) Representative: **Inspicos P/S**
**Kogle Allé 2**
**2970 Hørsholm (DK)**

(56) References cited:

| | |
|---|---|
| **EP-A1- 1 867 401** | **EP-A1- 2 036 944** |
| **EP-A1- 2 204 423** | **WO-A1-00/77102** |
| **WO-A1-2005/005516** | **WO-A1-2009/100908** |
| **WO-A2-2008/112159** | **WO-A2-2011/032845** |
| **JP-A- 2004 107 652** | **JP-A- 2010 235 792** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 726 560 B1

## Description

FIELD OF THE INVENTION

The present invention relates to novel low-solvent antifouling paint compositions based on a pre-polymer having hydrolysable silyl groups.

BACKGROUND OF THE INVENTION

EP 1641862 B1 discloses a silyl ester copolymer composition.

WO 2009/100908 discloses an antifouling composition comprising polyoxalates as binders.

JP 2010/235792 A discloses an amino group hardening agent carrying a hydrolytic group. The hydrolytic group is a group which has the feature that it hydrolyzes in sea water or fresh water. Ester groups and alkyl silyl groups are mentioned as examples of hydrolytic groups.

In view of the technologies of the prior art, there is still a need for alternative antifouling compositions, in particular high solids antifouling paint compositions.

SUMMARY OF THE INVENTION

It has been found by the present inventor(s) that the above-mentioned goal can be accomplished by the self-polishing antifouling composition defined herein.

So, in a first aspect the present invention relates to the self-polishing antifouling composition defined in claim 1. A second aspect of the invention relates to the kit defined in claim 13 herein. A third aspect of the invention relates to the kit defined in claim 14 herein. A fourth aspect of the invention relates to the base component defined in claim 15 herein. A fifth aspect of the invention relates to the marine structure defined in claim 20 herein. A sixth aspect of the invention relates to the method of coating a structure defined in claim 21 herein.

DETAILED DISCLOSURE OF THE INVENTION

*The antifouling coating composition*

As mentioned above, the present invention relates to an antifouling coating composition. The coating composition comprises a base component comprising pre-polymer having at least one epoxy-functional group, and one or more curing agents each having at least one active hydrogen, e.g. selected from amines, such as diamines and polyamines, and polymercaptans, such as aliphatic polymercaptans, cycloaliphatic polymercaptans, and aromatic polymercapatans. The coating composition may be presented as two or more components, preferably two components. Although generally not preferred from a practical point of view, the coating composition may include further components. The two or more components of the coating composition are typically combined and mixed shortly before application of the coating composition to the intended substrate as will be explained in details further below.

<u>The base component</u>

The base component of the coating composition comprises a pre-polymer which has at least one epoxy-functional group, said pre-polymer having at least one side chain bearing at least one terminal group of the general formula (I):

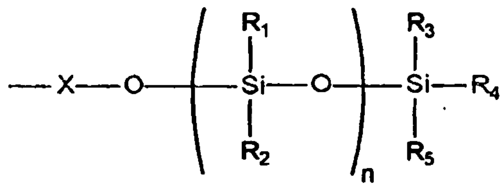

(I)

wherein X designates a carbonyl group (>C=O), n is an integer of 0-5,000, and $R_1$, $R_2$, $R_3$, $R_4$ and $R_5$ are each independently selected from $C_{1-20}$-alkyl and optionally substituted phenyl (e.g. $C_{1-4}$-alkyl and phenyl).

In the present context, the term "epoxy-functional group" is intended to mean moieties including an oxirane group:

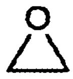 .

The pre-polymer has at least one epoxy-functional group and at least one side chain bearing at least one terminal group of the general formula (I).

In a currently preferred embodiment, the base component of the coating composition comprises an epoxy-functional pre-polymer having at least one side chain bearing at least one terminal group of the general formula (I)

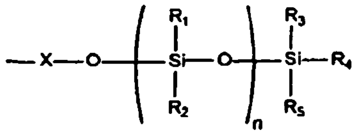 (I)

wherein X designates a carbonyl group (>C=O), n is an integer of 0-5,000, and $R_1$, $R_2$, $R_3$, $R_4$ and $R_5$ are each independently selected from $C_{1-20}$-alkyl and optionally substituted phenyl.

When the pre-polymer is epoxy-functional, it must (on average) include a sufficient number of epoxy groups so as to allow for reaction with the curing agent. Typically, the epoxy equivalent weight of the pre-polymer is in the range of 450-10,000, e.g. 500-7,500, such as 550-5,000, or 550-3,000. The epoxy equivalent weight is determined as described in the Examples section.

While n is an integer of 0, 1, 2, 3, 4 or more, it is in these cases preferred that n is up to about 5,000, such as 0-50, e.g. 0-10 or 1-15. In some special embodiments, n is 0, 1 or 2-5.

In some embodiments, n in general formula (I) is 0, such that the terminal group has the general formula (II):

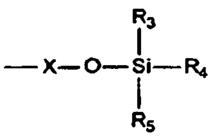 (II)

X is as defined above, and $R_3$-$R_5$ are each groups independently selected from the group consisting of $C_{1-20}$-alkyl and optionally substituted phenyl (e.g. phenyl).

With respect to the above formulae (I) and (II) it is preferred that each of the alkyl groups has up to about 6 carbon atoms, i.e. $C_{1-6}$-alkyl. Illustrative examples of substituents for the optionally substituted phenyl groups include halogen, nitro, $C_{1-6}$-alkyl and $C_{1-10}$-alkylcarbonyl. As indicated above, $R_1$-$R_5$ may be the same or different groups.

Alkyl groups include linear and branched as well as cyclic hydrocarbon groups, e.g. methyl, ethyl, 1-propyl, 2-propyl, 1-butyl, isobutyl, tert-butyl, cyclohexyl, octadecyl, etc. Preferred alkyl groups are linear, branched as well as cyclic hydrocarbon groups with 1-6 carbon atoms.

The groups of general formulae I and II represent a silyl ester which is hydrolysable in aquatic media, e.g. in sea water.

The acid value of the pre-polymer after the silyl ester groups are completely hydrolyzed is typically in the range of 5-500 mg KOH per grams of the pre-polymer [mg KOH/Solid·g], e.g. in the range of 30-350 mg KOH/Solid·g, such as in the range of 100-300 mg KOH/Solid·g. The acid value is determined as described in the Examples section.

In the case of the acid value of the pre-polymer after being completely hydrolyzed is below 5, the polishing rate, as determined in accordance with the Polishing Rate Test defined herein, is typically below 1 μm per 10,000 Nautical Miles. On the other hand, in the case of an acid value of above 500, the polishing rate is typically too high.

The pre-polymer typically has a relatively low molecular weight so as to facilitate desirable properties with respect to viscosity without the need for extensive amounts of solvent or diluents. Hence typically, the weight average molecular weight ($M_w$) of the pre-polymer in the range of 2,000-100,000, such as in the range of 2,000-50,000, e.g. in the range of 2,000-15,000.

In some interesting embodiments, the glass transition temperature, $T_g$, of the pre-polymer is in the range of -30 °C to 100 °C, e.g. in the range of -20 °C to 100 °C.

In some interesting embodiments, the high shear viscosity of the pre-polymer is in the range of up to 200 poise measured in accordance with ASTM standard D 4287-00.

It is envisaged that a range of suitable polymer backbones are relevant for the pre-polymers having the above-mentioned side chains. In currently preferred embodiments, the backbone of the pre-polymer is prepared from those of

ethylenically unsaturated monomers, e.g. (meth)acrylate-type monomers, styrene-type monomers, maleic acid-type monomers, fumaric acid-type monomers, vinylacetate-type monomers, vinylalcohol-type monomers, etc.

With respect to such pre-polymers of ethylenically unsaturated monomers, e.g. those having a (meth)acrylate backbone, monomers comprising a terminal group of the general formula I above, and the general formula II below, may be synthesised as described in EP 0 297 505 B1.

Pre-polymers may be obtained by co-polymerisation of such monomers with other ethylenically unsaturated monomers. Examples of suitable ethylenically unsaturated monomers include methacrylate esters such as methyl methacrylate, ethyl methacrylate, butyl methacrylate, 2-ethylhexyl methacrylate, 2-hydroxyethyl methacrylate, 2-hydroxypropyl methacrylate, methoxy ethyl methacrylate and isobornyl methacrylate; acrylate esters such as ethyl acrylate, butyl acrylate, 2-ethylhexyl acrylate, 2-hydroxyethyl acrylate, 2-hydroxypropyl acrylate and 4-hydroxybutyl acrylate, methoxy ethyl acrylate; maleic acid esters such as dimethyl maleate and diethyl maleate; fumaric acid esters such as dimethyl fumarate and diethyl fumarate; styrene, vinyltoluene, $\alpha$-methylstyrene, vinyl chloride, vinyl acetate, butadiene, acrylamide and acrylonitrile.

The amount of ethylenically unsaturated monomers is typically not more than 95 % by weight of the total weight of the resulting pre-polymer, preferably not more than 90 % by weight, such as not more than 85 % by weight. Accordingly, the amount of monomers comprising the terminal groups of the general formula I above is at least 1 % by weight, such as 1-80 % by weight, in particular at least 10 % by weight, such as 10-65 % by weight, or at least 15 % by weight, such as 15-60 % by weight of the pre-polymer.

The monomers comprising the terminal groups of the general formula I above typically constitutes 5-60 mol% of the monomer composition of the pre-polymer, preferably 10-50 mol%, such as 15-45 mol%.

The monomer(s) comprising epoxy-functional group(s) typically constitutes 0.5-95 mol% of the monomer composition of the pre-polymer, preferably 0.5-30 mol%, such as 2-20 mol%.

In another interesting embodiment of the invention the binder system to be used in the coating composition according to the invention comprises a silylated acrylate copolymer having at least one side chain bearing at least one terminal group of the general formula II:

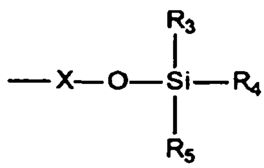

**(II)**

wherein X, $R_3$, $R_4$ and $R_5$ are as defined above.

Examples of monomers having a terminal group of the general formula II (shown above) are acid functional vinyl polymerisable monomers, such as monomers derived from acrylic acid, methacylic acid, maleic acid (preferably in the form of a monoalkyl ester with 1-6 carbon atoms) or fumaric acid (preferably in the form of a monalkyl ester with 1-6 carbon atoms). With respect to the triorganosilyl group, i.e. the $-Si(R_3)(R_4)(R_5)$ group, shown in the above formulae I or II, $R_3$, $R_4$ and $R_5$ may be the same or different. In one embodiment these substituents are the same.

Thus, specific examples of a suitable triorganosilyl group (i.e. the $-Si(R_3)(R_4)(R_5)$ group) shown in the general formula I or II include trimethylsilyl, triethylsilyl, tri-n-propylsilyl, tri-n-butylsilyl, tri-*iso*-propylsilyl, tri-n-pentylsilyl, tri-n-hexylsilyl, tri-n-octylsilyl, tri-n-dodecylsilyl, triphenylsilyl, tri-p-methylphenylsilyl, tribenzylsilyl, tri-2-methylisopropylsilyl, tri-*tert*-butylsilyl, ethyldimethylsilyl, n-butyldimethylsilyl, di-*iso*-propyl-n-butylsilyl, n-octyl-di-n-butylsilyl, di-*iso*-proprylodadecylsilyl, dicyclohexylphenylsilyl, *tert*-butyldiphenylsilyl, dodecyldiphenylsilyl and diphenylmethylsilyl.

Specific examples of suitable (meth)acrylic acid-derived monomers bearing at least one terminal group of the general formula I or II include trimethylsilyl (meth)acrylate, triethylsilyl(meth)acrylate, tri-n-propylsilyl(meth)acrylate, triisopropylsilyl (meth)acrylate, tri-n-butylsilyl (meth)acrylate, triisobutylsilyl (meth)acrylate, tri-tert-butylsilyl(meth)acrylate, tri-n-amylsilyl (meth)acrylate, tri-n-hexylsilyl (meth)acrylate, tri-n-octylsilyl (meth)acrylate, tri-n-dodecylsilyl (meth)acrylate, triphenylsilyl (meth)acrylate, tri-p-methylphenylsilyl (meth)-acrylate, tribenzylsilyl (meth)acrylate, ethyldimethylsilyl (meth)acrylate, n-butyldimethylsilyl (meth)acrylate, diisopropyl-n-butylsilyl (meth)acrylate, n-octyldi-n-butylsilyl (meth)acrylate, diisopropylstearylsilyl (meth)acrylate, dicyclohexylphenylsilyl (meth)acrylate, t-butyldiphenylsilyl (meth)acrylate, and lauryldiphenylsilyl (meth)acrylate.

In an interesting embodiment of the present invention, the pre-polymer to be used in the binder system comprises monomer units with a terminal group of the general formula I or II (as discussed above) in combination with a second monomer B of the general formula III:

$$Y\text{-}(CH(R_A)\text{-}CH(R_B)\text{-}O)_p\text{-}Z \qquad \text{(III)}$$

wherein Z is a $C_{1-20}$-alkyl group or an aryl group; Y is an acryloyloxy group, a methacryloyloxy group, a maleinoyloxy group or a fumaroyloxy group; $R_A$ and $R_B$ are independently selected from the group consisting of hydrogen, $C_{1-20}$-alkyl and aryl; and p is an integer of 1 to 25.

If p>2, $R_A$ and $R_B$ are preferably hydrogen or $CH_3$, i.e. if p>2 the monomer B is preferably derived from a polyethylene glycol or a polypropylene glycol. If p=1 it is contemplated that monomers, wherein $R_A$ and $R_B$ are larger groups, such as $C_{1-20}$-alkyl or aryl, may also be useful for the purposes described herein.

As shown in formula III, monomer B has in its molecule an acryloyloxy group, a methacryloyloxy group, a maleinoyloxy group (preferably in the form of a mono-$C_{1-6}$-alkyl ester), or a fumaroyloxy group (preferably in the form of a mono-$C_{1-6}$-alkyl ester) as an unsaturated group (Y) and also alkoxy- or aryloxypolyethylene glycol. In the alkoxy- or aryloxypolyethylene glycol group, the degree of polymerisation (p) of the polyethylene glycol is from 1 to 25.

Specific examples of monomer B which has a (meth)acryloyloxy group in a molecule include methoxyethyl (meth)acrylate, ethoxyethyl (meth)acrylate, propoxyethyl (meth)acrylate, butoxyethyl (meth)acrylate, hexoxyethyl (meth)acrylate, methoxydiethylene glycol (meth)acrylate, methoxytriethylene glycol (meth)acrylate, ethoxydiethylene glycol (meth)acrylate, and ethoxytriethylene glycol (meth)acrylate.

Specific examples of monomer B which has a maleinoyloxy or fumaroyloxy group in a molecule include methoxyethyl n-butyl maleate, ethoxydiethylene glycol methyl maleate, ethoxytriethylene glycol methyl maleate, propoxydiethylene glycol methyl maleate, butoxyethyl methyl maleate, hexoxyethyl methyl maleate, methoxyethyl n-butyl fumarate, ethoxydiethylene glycol methyl fumarate, ethoxytriethylene glycol methyl fumarate, propoxydiethylene glycol methyl fumarate, butoxyethyl methyl fumarate, and hexoxyethyl methyl fumarate.

As will be understood by the person skilled in the art, other vinyl monomers may be incorporated in the resulting pre-polymer comprising either monomer units having a terminal group of the general formula II (shown above) or in the resulting pre-polymer comprising monomer units having a terminal group of the general formula II (shown above) in combination with the second monomer B of the formula III (shown above).

With respect to other monomers co-polymerisable with the above-mentioned monomers, use may be made of various vinyl monomers such as the vinyl polymerisable monomers discussed above.

Specific examples of monomers which has an epoxy-functional group in a molecule include glycidyl (meth)acrylate, allyl glycidyl ether, 4-hydroxybutyl acrylate glycidyl ether, and 1-vinyl-3,4-epoxy cyclohexane.

<u>The curing agent</u>

The coating composition also includes one or more curing agents each having at least one active hydrogen.

The number of active hydrogens is defined as number of epoxy-reactive hydrogens, i.e. typically hydrogen atoms bound as N-H and S-H.

Curing agents having at least one active hydrogen are typically selected from amines (such as diamines, polyamines, polyamidoamines, as well as boron trifluoride complexes thereof), amine adducts and polymercaptans (such as aliphatic polymercaptans, cycloaliphatic polymercaptans, aromatic polymercapatans, and thiol-terminated polymers).

In one embodiment the curing agent is selected from amines (amine-type curing agents).

Suitable amines include amines (e.g. diamine and polyamines) and amino functional polymers such as those selected from aliphatic amines and polyamines (*e.g.* cycloaliphatic amines and cycloaliphatic polyamines), diamines, polyamidoamines, polyoxyalkylene amines (*e.g.* polyoxyalkylene diamines), polyoxyalkylene di- and polyamines (*e.g.* those known as "Jeffamines"), alkylene amines (*e.g.* alkylene diamines), aralkylamines, aromatic amines, imidazolines, Mannich bases, amino functional silicones or silanes, and ketimine- and amine-modified thio-lactic acid, and including derivatives thereof.

Ketamines are to be viewed as latent amines (see below) which may be useful when formulating a one-component product. Upon application, the amine is liberated when exposed to moisture.

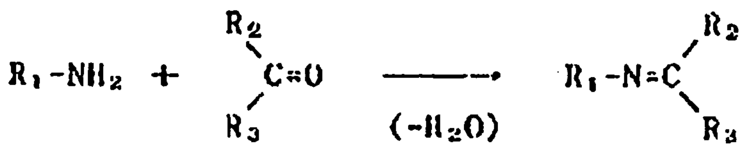


Another interesting type of curing agent is the amine modified thio-lactic acid which can be viewed as an amine-modified thiourea.

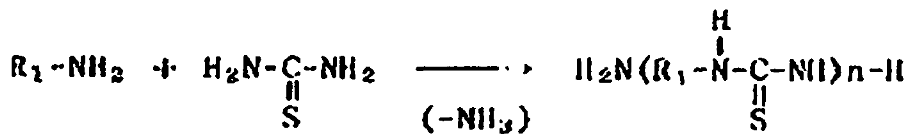

Examples of suitable commercially available amine-type curing agents are:

Cardolite NC-541, ex. Cardanol Chemicals (USA), Mannich base
Cardolite Lite 2001, ex. Cardanol Chemicals (USA), Mannich base
Sunmide CX-105X, ex. Sanwa Chemical Ind. Co. Ltd. (Singapore), Mannich base
Epikure 3140 Curing Agent, ex. Resolution Performance Products (USA), polyamidoamine
SIQ Amin 2030, ex. SIQ Kunstharze GmbH (Germany), polyamidoamine
Epikure 3115X-70 Curing Agent, ex. Resolution Performance Products (USA), polyamidoamine
SIQ Amin 2015, ex. SIQ Kunstharze GmbH (Germany), polyamidoamine
Polypox VH 40309/12, ex. Ulf Prummer Polymer-Chemie GmbH (Germany), polyoxyalkylene amine
CeTePox 1490 H, ex. CTP Chemicals and Technologies for Polymers (Germany), polyoxyalkylene amine
Epoxy hardener MXDA, ex. Mitsubishi Gas Chemical Company Inc (USA), aralkyl amine
Diethylaminopropylamine, ex. BASF (Germany), aliphatic amine
Gaskamine 240, ex. Mitsubishi Gas Chemical Company Inc (USA), aralkyl amine
Cardolite Lite 2002, ex. Cardanol Chemicals (USA), Mannich base
Aradur 42 BD, ex. Huntsman Advanced Materials (Germany), cycloaliphatic amine
Isophorondiamin, ex. BASF (Germany), cycloaliphatic amine
Meta-xylenediamine, ex. Mitsubishi Gas Chemical Co. Inc. (Japan), aliphatic diamine
MDA-220, ex. Mitsui Chemicals, Inc (Japan), aromatic diamine
BAFL, ex. JFE Chemical Co., Ltd (Japan), aromatic diamine
Wandamine HM, ex. New Japan Chemical Co., Ltd. (Japan), cycloaliphatic diamine
Hexamethylene diamine, ex. Kishida Chemical Co., Ltd. (Japan), aliphatic diamine
Adeka hardner EH376-2, ex. Asahi denka Co., Ltd. (Japan), cycloaliphatic polyamine
Ancamide 506, ex. Air Products Japan Co. Ltd. (Japan), aliphatic polyamine
Aradur 424, ex Hutsman Advanced Materials (Switzerland), polyaminoamide
Versamid 100, ex Cognis (USA), reactive polyamide resin based on dimerized fatty acid and polyamines
Versamid 115, ex Cognis (USA), reactive polyamide resin based on dimerized fatty acid and polyamines
Ancamide 220, ex Air Products (USA), polyaminoamide
Versamid 125, ex Cognis (USA), reactive polyamide resin based on dimerized fatty acid and polyamines
Aradur 460, ex Hutsman Advanced Materials (Switzerland) polyaminoamide
Versamid 140, ex Cognis (USA), reactive polyamide resin based on dimerized fatty acid and polyamines

In one particular embodiment hereof, the amine is in the form of the boron trifluoride-amine complex, e.g. of the type disclose in "Three Bond Technical News", Issued December 20, 1990, No. 32, "Curing Agents for Epoxy Resin".

In another embodiment, the curing agent is selected from amines having at least two active hydrogens within one molecule. In some embodiments, the amine has three or more active hydrogens. In some instances, the number of active hydrogens is 2-20, such as 2-10, or 2-6, or 3-8. It should be understood that for commercial product in the form of mixtures, the above numbers should be construed as the average number of active hydrogen in the population of amine molecules.

In one interesting embodiment, the curing agent is selected from diamines and polyamines, including aliphatic diamines, cycloaliphatic diamines, aromatic diamines, aliphatic polyamines, cycloaliphatic polyamines, and aromatic polyamines.

In another embodiment, the amine is an aliphatic or cycloaliphatic amine, e.g. an aliphatic or cycloaliphatic diamine, or an aliphatic or cycloaliphatic polyamine.

In another interesting embodiment, the curing agent is selected from, polyamidoamines and imidazolines.

The amine equivalent weight of said one or more amine-type curing agents is typically in the range of 20-2,000, e.g. 30-1,200, such as 30-900. The amine equivalent weight is determined as described in the Examples section.

The amine hydrogen equivalent weight (AHEW) of said one or more amine-type curing agents is typically in the range of 15-10,000, e.g. 20-5,000, such as 20-1,000. The amine hydrogen equivalent weight (AHEW) is determined as described in the Examples section.

The ratio between the amines of the amine-type curing agent(s) and the epoxy-functional groups of the pre-polymer and (amine:epoxy) (A/E) is typically in the range of 0.1:1 to 4.0:1, such as 0.2:1 to 4.0:1, or 0.2:1 to 3:1, or 0.1:1

to 3:1.

The ratio between the active hydrogens of the amine-type curing agent(s) and the epoxy-functional groups of the pre-polymer and (hydrogen:epoxy) (H/E) is typically in the range of 0.3:1 to 3.5:1, such as 0.5:1 to 2.5:1 e.g. 0.5:1 to 1.5:1, or 0.5:1 to 1.2:1, or 0.3:1 to 1.2:1.

In another embodiment, the curing agent is selected from amine epoxy adducts. An amine epoxy adduct is prepared by mixing an epoxy resin or an epoxy reactive diluent with an excessive amount of amine that consumes all the epoxy groups but all the reactive hydrogens in the amine are not consumed. The resulting substance can be used as curing agent in epoxy paints.

Examples of suitable commercially available amine epoxy adduct-type curing agents are:

Epikure 3090 Curing Agent, ex. Resolution Performance Products (USA), polyamidoamine adduct with epoxy
Crayamid E260 E90, ex. Cray Valley (Italy), polyamidoamine adduct with epoxy
Aradur 943 CH, ex. Huntsman Advanced Materials (Switzerland), alkylene amine adduct with epoxy
Aradur 863 XW 80 CH, ex. Huntsman Advanced Materials (Switzerland), aromatic amine adduct with epoxy.

The amine equivalent weight of said one or more amine epoxy adduct-type curing agents is typically in the range of 20-2,000, e.g. 30-1,200, such as 30-900. The amine equivalent weight is determined as described in the Examples section.

The amine hydrogen equivalent weight (AHEW) of said one or more amine epoxy adduct-type curing agents is typically in the range of 15-10,000, e.g. 20-5,000, such as 20-1,000. The amine hydrogen equivalent weight (AHEW) is determined as described in the Examples section.

The ratio between the amines of the amine epoxy adduct-type curing agent(s) and the epoxy-functional groups of the pre-polymer and (amine:epoxy) (A/E) is typically in the range of 0.1:1 to 4.0:1, such as 0.2:1 to 4.0:1, or 0.2:1 to 3:1, or 0.1:1 to 3:1.

The ratio between the active hydrogens of the amine epoxy adduct-type curing agent(s) and the epoxy-functional groups of the pre-polymer and (hydrogen:epoxy) (H/E) is typically in the range of 0.3:1 to 3.5:1, such as 0.5:1 to 2.5:1 e.g. 0.5:1 to 1.5:1, or 0.5:1 to 1.2:1, or 0.3:1 to 1.2:1.

In still another interesting embodiment, the curing agent is selected from polymercaptans. Polymercaptans are those having at least two mercaptan (-SH) groups within a single molecule. Examples of polymercaptans are aliphatic polymercaptans, cycloaliphatic polymercaptans, and aromatic polymercaptans. Other examples of polymercaptans are thiol-terminated polymers, e.g. linear polymers having terminal thiol-groups.

Specific examples of suitable polymercaptans are: pentaerythritol tetrakis (3-mercaptobutylate), 1,4-bis(3-mercaptobutyryloxy) butane, 1,3,5-tris(3-mercaptobutyryloxyethyl-1,3,5-triazine-2,4,6(1H,3H,5H)-trion, pentaerythritol tetrakis (3-mercaptopropionate), 2,4,6-trimercapto-s-triazine mono sodium salt, 2-dibutylamino-4,6-dimercapto-s-triazine, 2-anilino-4,6-dimercapto-s-triazine, and 2,4,6-trimercapto-s-triazine.

Examples of suitable commercially available polymercaptan-type curing agents are:

Karenz MT PE1, ex Showa denko Co., Ltd. (Japan), aliphatic polymercaptan
Daito Kral MR-94, ex. Daito sangyo Co., Ltd (Japan), aliphatic polymercaptan
Sun thiol N-1, ex. Sankyo kasei Chemical Co., Ltd (Japan), aromatic polymercaptan
Poly thiol QE-340 M, ex. Toray Industries Inc. (Japan), aliphatic polymercaptan
Adeka hardner EH316, ex. Asahi denka Co., Ltd. (Japan), aliphatic polymercaptan
Zisnet DB, ex. Sankyo-Kasai Co., Ltd. (Japan), aromatic polymercaptan (2-dibutylamino-4,6-dimercapto-s-triazine)
GPM-800, ex. Gabriel Performance Products, (US), mercaptan-terminated polymer
Capcure 3-800, ex. BASF (Germany), mercaptan-terminated polymer.

The thiol hydrogen equivalent weight (THEW) of said one or more polymercaptan-type curing agents is typically in the range of 15-10,000, e.g. 20-5,000, such as 20-1,000. The thiol hydrogen equivalent weight (THEW) is determined as described in the Examples section.

The ratio between the thiol hydrogens of the polymercaptan-type curing agents and the epoxy-functional groups of the pre-polymer and (hydrogen:epoxy) (H/E) is typically in the range of 0.3:1 to 3.5:1, such as 0.5:1 to 2.5:1 e.g. 0.5:1 to 1.5:1, or 0.5:1 to 1.2:1, or 0.3:1 to 1.2:1.

In some preferred embodiments, the coating composition includes a separate second component which comprises or consists of the one or more curing agents.

In other embodiments, such a second component comprises some (but not all) of the one or more curing agents. In such embodiments, any remaining curing agents (in particular slowly reacting curing agents) may be included in the base component.

In further embodiments, the one or more curing agents are included in the base component, and a second

component comprises or consists of one or more accelerators (see further below).

Based on the preliminary results, it appears that the polishing rate may be adjusted by proper selection of the curing agent. Hence, it has been observed that the selection of an amine as the curing agent appears to provide a relatively high polishing rate, whereas the selection of polymercaptans or amine adducts appear to provide a relatively lower polishing rate. This appears to be an important feature of the invention, in that the desirable polishing rate differs for different applications. Polishing is the decrease in thickness of an antifouling coating measured in micrometer. Polishing is typically a combination of erosion and hydrolysis of the paint coat in sea water. Hence, e.g. biocides (if present) can be released in a controlled manner. Polishing rate of a paint coat is a parameter that allows to adapt the antifouling paint to the sailing conditions of the vessels. For vessels with low activity and low speed, antifouling paints with high polishing rates (e.g. those where an amine curing agent is utilized) are preferred as they compensate the low distance sailed with a higher thickness decrease per distance in the paint. On the other hand, for vessels with high activity and high speed, the preferred paints are the ones with low polishing rates (e.g. those where an amine adduct or a polymercaptan curing agent is utilized).

*Further ingredients*

The base component may apart from the pre-polymer have included therein one or more further ingredients, and even in some special embodiments include at least some of the one or more curing agents. If desirable, however, some or all of such other ingredients may alternatively be presented as a separate (second or third) component in addition to the base component.

Examples of further ingredients are further binder components such as: rosin, rosin derivatives such as metal salts of rosin i.e. resinates, oils such as linseed oil and derivatives thereof, castor oil and derivatives thereof, soy bean oil and derivatives thereof; and other polymeric binder components such as saturated polyester resins; polyvinylacetate, polyvinylbutyrate, polyvinylchloride-acetate, copolymers of vinyl acetate and vinyl isobutyl ether; vinylchloride; copolymers of vinyl chloride and vinyl isobutyl ether; alkyd resins or modified alkyd resins; hydrocarbon resins such as petroleum fraction condensates; chlorinated polyolefines such as chlorinated rubber, chlorinated polyethylene, chlorinated polypropylene; styrene copolymers such as styrene/butadiene copolymers, styrene/methacrylate and styrene/acrylate copolymers; acrylic resins such as homopolymers and copolymers of methyl methacrylate, ethyl methacrylate, n-butyl methacrylate, isobutyl methacrylate and isobutyl methacrylate; hydroxy-acrylate copolymers; cyclised rubbers; epoxy esters; epoxy urethanes; polyurethanes; epoxy polymers; etc., as well as copolymers thereof.

The terms "rosin", "resinate" and the like is intended to refer to gum rosin; wood rosin of grades B, C, D, E, F, FF, G, H, I, 3, K, L, M, N, W-G, W-W (as defined by the ASTM 0509 standard); virgin rosin; hard rosin; yellow dip rosin; NF wood rosin; tall oil rosin; or colophony or colophonium. The terms "rosin" and "resinate" and the like are also intended to include suitable types of modified rosin, in particular oligomerisation; hydrogenation; dehydrogenation hydrogenation/disproportionation/dismutation; etc., that will reduce the amount of conjugated non-aromatic double bonds.

It should be understood that the group of further binder components may include polymeric flexibilisers such as those generally and specifically defined in WO 97/44401 that is hereby incorporated by reference.

The dry matter of such further binder components typically constitutes 0-35 %, e.g. 0-20 %, such as 0-15 %, or 1-35 %, e.g. 1-20 %, such as 1-15 %, by wet weight of the coating composition.

The base component and/or a second component comprising one or more curing agents (or any third component) may of course also include pigments, fillers, fibres, antifouling agents, dyes, additives, reactive diluents, accelerators and solvents, as well as other suitable constituents to be included in the binder phase of coating compositions.

However, such constituents (i.e. pigments, fillers, fibres, antifouling agents, dyes, additives, reactive diluents, accelerator and solvents) are typically incorporated in a total amount of up to 85 %, e.g. up to 80 %, or up to 60 %, such as up to 50 %, by solids volume, e.g. in amounts of 20-50 % or 35-50 % by solids volume of the coating composition. When related to the wet weight of the total coating composition (i.e. the base component, the curing agent(s) and any further component(s)), such constituents are typically incorporated in a total amount of up to 60 %, such as up to 50 % by wet weight, e.g. in amounts of 0.1-40 %, or 0.1-30 %, by wet weight of the coating composition. In certain high solids embodiments, such constituents are typically incorporated in a total amount of 60-85 %, such as 75-80 % by wet weight of the coating composition.

Examples of pigments are copper, copper metal alloys such as copper-nickel alloys, grades of metal oxides such as cuprous oxide ($Cu_2O$) and cupric oxide (CuO), titanium dioxide, red iron oxide, zinc oxide, carbon black, graphite, yellow iron oxide, red molybdate, yellow molybdate, zinc sulfide, antimony oxide, sodium aluminium sulfosilicates, quinacridones, phthalocyanine blue, phthalocyanine green, black iron oxide, indanthrone blue, cobalt aluminium oxide, carbazole dioxazine, chromium oxide, isoindoline orange, bis-acetoacet-o-tolidiole, benzimidazolon, quinaphtalone yellow, isoindoline yellow, tetrachloroisoindolinone, quinophthalone yellow. Such materials are characterised in that they render the final paint coat non-transparent and non-translucent. Even though, e.g., copper, copper metal alloys, cuprous oxide and cupric oxide may have antifouling agent characteristics, it is understood that in the present context such

constituents are only considered as "pigments".

When cuprous oxide is present in the coating composition, the $Cu_2O$ content is preferably 1-40 % by solids volume, such as in the range of 5-35 % by solids volume of the coating composition. When expressed by wet weight of the coating composition, and when cuprous oxide is present, the $Cu_2O$ content is preferably at least 5 % by wet weight, such as in the range of 10-75 % by wet weight of the coating composition. In certain high solids embodiments, $Cu_2O$ content is preferably at least 5 % by wet weight, such as in the range of 10-80 % by wet weight of the coating composition.

The pigments phase may further include pigment-like ingredients such as fillers.

Examples of fillers are calcium carbonate, dolomite, talc, mica, barium sulfate, kaolin, silica (including pyrogenic silica, colloidal silica, fumed silica, etc.), perlite, magnesium oxide, calcite and quartz flour, molecular sieves, synthetic zeolites, calcium silicophosphate, hydrated aluminium silicate (bentonite), organo-modified clays, anhydrous gypsum, etc. These materials are characterised in that they do not render the final paint coat non-translucent and therefore do not contribute significantly to hide any material below the final paint coat.

It should be noted that some of the fillers (and pigments) may provide certain advantageous properties of the types provided by the additives of the binder phase (e.g. as stabilizers against moisture, dehydrating agents, water scavengers, thickeners and anti-settling agents, etc.), however for the purpose of the present application with claims, such particulate materials are to be construed as being part of the pigment phase.

Examples of fibres are e.g. those generally and specifically described in WO 00/77102, which is hereby incorporated by reference.

In order for a certain particle to be considered as a fibre within the present context, the ratio between the greatest dimension and the smallest dimension perpendicular to the length dimension in substantially all points along the longitudinal axis (the length dimension - longest dimension) should not exceed 2.5:1, preferably not exceeding 2:1. Furthermore, the ratio between the longest dimension and the average of the two shortest dimensions should be at least 5:1. Thus, fibres are characterised of having one long dimension and two short dimension, where the long dimension is substantially longer than the two short dimensions (typically by an order of magnitude, or even more), and the two short dimensions are substantially equal (of the same order of magnitude). For completely regular fibres, i.e. fibres having a cylindrical shape, it is evident how to determine the "length" (longest dimension) and the two (identical) shortest dimensions. For more irregular fibres, it is believed that the relationship between the dimensions can be evaluated by the following hypothetical experiment: A regular, right-angled box is constructed around the fibre. The box is constructed so as to have the smallest possible volume, as it should fully comprise the fibre. To the extent that the fibre is curved, it is (again hypothetically) assumed that the fibre is flexible so that the volume of the hypothetical box can be minimised by "bending" the fibre. In order for the "fibre" to be recognised as such in the present context, the ratio between the two smallest dimensions of the box should be at the most 2.5:1 (preferably 2:1) and the ratio between the longest dimension of the box and the average of the to smallest dimensions of the box should be at least 5:1.

At present, especially preferred are mineral fibres such as mineral-glass fibres, wollastonite fibres, montmorillonite fibres, tobermorite fibres, atapulgite fibres, calcined bauxite fibres, volcanic rock fibres, bauxite fibres, rockwool fibres, and processed mineral fibres from mineral wool.

When present, the concentration of the fibres is normally in the range of 0.5-15 %, e.g. 1-10 % by solids volume of the coating composition.

When related to the total composition (wet weight), and when present, the concentration of the fibres is normally in the range of 0.1-20 %, e.g. 0.5-10 %, by wet weight of the coating composition. In certain high solids embodiments, the concentration of the fibres is normally in the range of 0.1-25 %, e.g. 0.5-15 %, by wet weight of the coating composition.

It should be understood that the above ranges refer to the total amount of fibres, thus, in the case where two or more fibre types are utilised, the combined amounts should fall within the above ranges.

The coating composition may also comprise one or more antifouling agents as is customary within the field. Examples of antifouling agents are: metallo-dithiocarbamates such as bis(dimethyldithiocarbamato)zinc, ethylene-bis(dithiocarbamato)zinc (Zineb), ethylene-bis-(dithiocarbamato)manganese, and complexes between these; bis(1-hydroxy-2(1H)-pyridinethionato-O,S)-copper (copper pyrithione; Copper Omadine); copper acrylate; bis(1-hydroxy-2(1H)-pyridinethionato-O,S)-zinc (zinc pyrithione; Zinc Omadine); phenyl(bispyridyl)-bismuth dichloride; metal salts such as cuprous thiocyanate, basic copper carbonate, copper hydroxide, barium metaborate, and copper sulphide; heterocyclic nitrogen compounds such as 3a,4,7,7a-tetrahydro-2-((trichloromethyl)-thio)-1H-isoindole-1,3(2H)-dione, pyridine-triphenylborane (Borocide P), 1-(2,4,6-trichlorophenyl)-1H-pyrrole-2,5-dione, 2,3,5,6-tetrachloro-4-(methylsulfonyl)-pyridine, 2-methylthio-4-tert-butylamino-6-cyclopropylamine-s-triazine (Irgarol 1051), and quinoline derivatives; heterocyclic sulfur compounds such as 2-(4-thiazolyl)benzimidazole, 4,5-dichloro-2-n-octyl-4-isothiazolin-3-one, 4,5-dichloro-2-octyl-3(2H)-isothiazoline (Sea-Nine® 211N), 1,2-benzisothiazolin-3-one, and 2-(thiocyanatomethylthio)-benzothiazole; urea derivatives such as N-(1,3-bis(hydroxymethyl)-2,5-dioxo-4-imidazolidinyl)-N,N'-bis(hydroxymethyl)urea, and N-(3,4-dichlorophenyl)-N,N-dimethylurea (Diuron), and N,N-dimethylchlorophenylurea; amides or imides of carboxylic acids; sulfonic acids and of sulfenic acids such as 2,4,6-trichlorophenyl maleimide, 1,1-dichloro-N-((dimethylamino)sulfonyl)-1-fluoro-N-(4-methylphenyl)-methanesulfenamide (Preventol A5F), 2,2-dibromo-3-nitrilo-propionamide, N-(fluorodichloromethylthio)-phthalimide, N,N-dimethyl-N'-phenyl-N'-(fluorodichloromethylthio)-sulfamide, and N-methylol formamide; salts or esters of carboxylic acids such as 2-((3-iodo-2-propynyl)oxy)-ethanol phenylcarbamate and N,N-didecyl-N-methyl-poly(oxyethyl)ammonium propionate; amines such as dehydroabiethylamines and cocodimethylamine; substituted methane such as di(2-hydroxy-ethoxy)methane, 5,5'-dichloro-2,2'-dihydroxydiphenylmethane, and methylene-bisthiocyanate; substituted benzene such as 2,4,5,6-tetrachloro-1,3-benzenedicarbonitrile, 1,1-dichloro-N-((dimethylamino)-sulfonyl)-1-fluoro-N-phenylmethanesulfenamide, and 1-((diiodomethyl)sulfonyl)-4-methyl-benzene; tetraalkyl phosphonium halogenides such as tri-n-butyltetradecyl phosphonium chloride; guanidine derivatives such as n-dodecylguanidine hydrochloride; disulfides such as bis-(dimethylthiocarbamoyl)-disulfide, tetramethylthiuram disulfide; imidazole containing compound, such as medetomidine; 2-(p-chlorophenyl)-3-cyano-4-bromo-5-trifluoromethyl pyrrole (Econea) and mixtures thereof.

Presently, it is preferred that the antifouling agent is an agent that does not comprise tin.

In one preferred embodiment the coating composition comprises an antifouling agent selected from the group consisting of pyridine-triphenylborane (Borocide P), 2-(p-chlorophenyl)-3-cyano-4-bromo-5-trifluoromethyl pyrrole (Econea) and imidazole containing compounds, such as medetomidine.

The total amount of the antifouling agent(s), if present, is typically in the range of up to 30 %, such as 0.05-25 %, by solids volume of the coating composition, e.g. 0.05-20 % by solids volume of the coating composition.

When related to the total weight of the coating composition, the total amount of the antifouling agent(s), if present, is typically in the range of 0-40 %, such as 0.05-30 %, by wet weight of the coating composition, e.g. 0.05-20 % by wet weight of the coating composition. In certain high solids embodiments, the total amount of the antifouling agent(s), if present, is normally in the range of 0-50 %, e.g. 0.05-25 %, by wet weight of the coating composition.

Examples of dyes are 1,4-bis(butylamino)anthraquinone and other anthraquinone derivatives; toluidine dyes etc.

Examples of additives are i) plasticizers such as chlorinated paraffin; phthalates such as dibutyl phthalate, benzylbutyl phthalate, dioctyl phthalate, diisononyl phthalate and diisodecyl phthalate; phosphate esters such as tricresyl phosphate, nonylphenol phosphate, octyloxipoly(ethyleneoxy)ethyl phosphate, tributoxyethyl phosphate, isooctylphosphate and 2-ethylhexyl diphenyl phosphate; sulfonamides such as N-ethyl-p-toluensulfonamide, alkyl-p-toluene sulfonamide; adipates such as bis(2-ethylhexyl)adipate), diisobutyl adipate and dioctyladipate; phosphoric acid triethyl ester; butyl stearate; sorbitan trifoliate; and epoxidised soybean oil; ii) surfactants such as derivatives of propylene oxide or ethylene oxide such as alkylphenol-ethylene oxide condensates; ethoxylated monoethanolamides of unsaturated fatty acids such as ethoxylated monoethanolamides of linoleic acid; sodium dodecyl sulfate; alkylphenol ethoxylates; and soya lecithin; wetting agents and dispersants; iii) defoaming agents such as silicone oils; iv) stabilisers such as stabilisers against light and heat, e.g. hindered amine light stabilisers (HALS), 2-hydroxy-4-methoxybenzophenone, 2-(5-chloro-(2H)-benzotriazol-2-yl)-4-methyl-6-(tert-butyl)phenol, and 2,4-ditert-butyl-6-(5-chlorobenzotriazol-2-yl)phenol; stabilisers against moisture or water scavengers, molecular sieves, oxazolidines, substituted silanes, and ortho formic acid triethyl ester; v) stabilisers against oxidation such as butylated hydroxyanisole; butylated hydroxytoluene; propylgallate; tocopherols; 2,5-di-tert-butyl-hydroquinone; L-ascorbyl palmitate; carotenes; vitamin A; vi) inhibitors against corrosion such as aminocarboxylates, ammonium benzoate, barium/-calcium/zinc/magnesium salts of alkylnaphthalene sulfonic acids, zinc phosphate; zinc metaborate; vii) coalescing agents such as glycols, 2-butoxy ethanol, and 2,2,4-trimethyl-1,3-pentanediol monoisobutyrate; and viii) thickeners and anti-settling agents such as aluminium tristearate, aluminium monostearate, ricinus oil, xanthan gum, salicylic acid, hydrogenated castor oil, polyamide waxes and polyethylene waxes; and ix) dehydrating agents such as orthopropionic acid ester, orthoformic acid ester, orthoacetic acid ester, alkoxysilane, and alkyl silicates like tetra ethyl ortosilicate.

It is preferred that the coating compositions comprise dyes and additives in a cumulative amount of 0-20 %, e.g. 1-20 %, by solids volume of the coating composition.

When related to the total weight of the coating composition, it is preferred that the coating compositions comprise dyes and additives in a cumulative amount of 0-10 %, e.g. 1-10 %, by wet weight of the coating composition. In certain high solids embodiments, the coating compositions comprise dyes and additives in a cumulative amount of 0-15 %, e.g. 1-15 %, by wet weight of the coating composition.

The base component (but preferably not a component comprising the one or more curing agents) may further include one or more reactive diluents.

Examples of reactive diluents to be included are butylglycidyl ether, phenyl glycidyl ether, cresylglycidyl ether, 2-ethyl hexyl glycidyl ether, neopentyl glycol diglycidyl ether, p-tertbutylphenol glycidyl ether, 1,6-Hexanediol diglycidyl ether, 1,4-butanediol diglycidyl ether, resorcinol diglycidyl ether, trimethylol propane triglycidyl ether, and glycidyl neodeconoate (2,3-epoxypropyl neodecanoate).

It is preferred that the coating composition comprise reactive diluents in a cumulative amount of 0-40 %, e.g. 0-20 %, such as 0-10 %, by solids volume of the coating composition.

Examples of suitable commercially available reactive epoxy diluents are:

2,3-epoxypropyl neodecanoate, NEO-S, ex. Neo-Tohto S, Nippon Steel Chemical Co., Ltd. (Japan)
1,6-Hexanediol diglycidyl ether, HD, ex. ADEKA GLYCIROL ED-503, Adeka Corporation (Japan)
Cardura E10P (Hexion)
Epodil 748 (Air Products)
Araldite DY-H/BD (Hunstman Advanced Materials)
Epodil 757 (Air Products)
Epikote resin 493 (Hexion Specialty Chemicals)
Araldite DY-D/CH (Hunstman Advanced Materials)
Cardolite NC 513 (Cardolite Corporation)

The composition may further include one or more accelerators. Such accelerators are preferably presented in a component separate from the base component and the one or more curing agents, or as a part of the based component or a part of the component comprising the one or more curing agents.

Examples of accelerators to be included are such as those described in "Protective Coatings. Fundamentals of Chemistry and Compostion" by Clive H. Hare, Chapter 15, Technology Publishing Company, Pennsylvania. 1994. ISBN 0-938477-90-0, e.g. tertiary amines such as triethylene diamine and tris(dimethylaminomethyl)phenol, phosphorous compounds such as triphenyl phosphine, 1,2-bis(diphenylphosphino) ethane, diphenylphosphinouschloride, tri-o-totylphosphine, tri-m-tolylphosphine, tri-p-tolylphosphine, tris(p-methoxyphenyl)phosphine, diphenylcyclohexylphosphine, tricyclohexylphosphine, tributylphosphine, tri-tert-butylphosphine, tri-n-octylphosphine, diphenylphosphinostyrene, 1,3-bis(diphenylphosphino) propane, and 1,4-bis(diphenylphosphino) butane, alcohols such as phenols, alkyl phenols and aliphatic alcohols, organic acids such as sulfonic acids and salicylic acid, boron halogenides such as boron trifluoride, inorganic acids such as lithium chloride and calcium nitrate, as well as organometalic salt such as zinc stearate.

If present, it is preferred that the coating composition comprise accelerators in an amount of 0.05-15 %, e.g. 0.05 -10 %, such as 0.1-10 %, or 0.2-5.0 %, or 0.3-4.5 %, by solids volume of the coating composition.

Examples of solvents are aliphatic, cycloaliphatic and aromatic hydrocarbons such as white spirit, cyclohexane, toluene, xylene and naphtha solvent; alcohols such as ethanol, n-butanol, 1-methoxy-2-propanol, and 2-butoxy-ethanol; ketones such as methyl ethyl ketone, acetone, methyl isobutyl ketone, methyl isoamyl ketone, diacetone alcohol and cyclohexanone; ethyl ether; esters such as ethyl acetate, propyl acetate, methoxypropyl acetate, n-butyl acetate and 2-ethoxyethyl acetate; chlorinated hydrocarbons such as methylene chloride, tetrachloroethane and trichloroethylene; and mixtures thereof.

When related to the total weight of the coating composition, it is preferred that the coating compositions comprise one or more solvents in a cumulative amount of 0-30 %, such as 0-20 %, by wet weight of the coating composition. In certain high solids embodiments, the coating compositions comprise one or more solvents in a cumulative amount of 0-10 %, e.g. 0-5 %, by wet weight of the coating composition.

In the present context the term "% by wet weight" is intended to mean the weight/weight percentage of the wet matter of the coating composition. It should be understood that solvents are included.

In the present context the term "% by solids volume" is intended to mean the volume/volume percentage of the solid (i.e. non-volatile) matter of the coating composition. It should be understood that any solvents (i.e. volatiles) are disregarded.

*Preparation of the coating composition*

The base component of the present invention is prepared usually by mixing and dispersing the above constituents all at once or in a divided fashion by a conventional apparatus for producing coating compositions (paints), such as a ball mill, a pearl mill, a three-roll mill, a high speed disperser. The base component according to the invention, optionally containing fibres, may be filtrated using bag filters, patron filters, wire gap filters, wedge wire filters, metal edge filters, EGLM turnoclean filters (ex Cuno), DELTA strain filters (ex Cuno), and Jenag Strainer filters (ex Jenag), or by vibration filtration. Prior to application, the base component is mixed with a second component and any third component, etc.

The coating composition of the present invention may be coated as it is or after having the viscosity adjusted by a diluting solvent, on a ship or a maritime structure having a rust preventive coating material coated thereon, by e.g. airless spray-coating, plural component airless, air spray-coating, roller coating or brush coating. The exact technique chosen depends upon the object to be protected and also upon the particular composition (such as its viscosity, pot life etc.) and upon the particular situation. Preferred applications techniques are spraying and by means of a brush or a roller.

It should be understood that the base component and a second component e.g. comprising or consisting of the one or more curing agents, and any further components, can be prepared and shipped separately, and are thoroughly mixed immediately prior to application.

Hence, the present invention further provides a kit comprising the antifouling paint composition as defined

herein, wherein a first container holds the component a (the base component) and a second container holds the one or more curing agents. In this embodiment, the kit may comprise one or more accelerators, e.g. included in the first container or included in the second container or included in a separate container.

In another embodiment, the invention provides a kit comprising the antifouling paint composition as defined herein, wherein a first container holds the base component and the curing agent, and wherein a second container holds the one or more accelerators. In one variant of this embodiment, the curing agent is a polymercaptan curing agent, and the one or more accelerators are preferably selected phosphines and tertiary amines.

In a still further embodiment, all constituents may be formulated as a one-component coating composition. In this embodiment, the one or more curing agents are preferably of the ketamine type.

Moreover, the present invention also provides a particular embodiment of the base component as a separate product, namely a base component for an antifouling paint composition, said component comprising a base component comprising an epoxy-functional pre-polymer having at least one side chain bearing at least one terminal group of the general formula I (see above), wherein X designates a carbonyl group (>C=O), n is an integer of 0-5,000, and $R_1$, $R_2$, $R_3$, $R_4$ and $R_5$ are each independently selected from $C_{1-20}$-alkyl and optionally substituted phenyl; and wherein the epoxy equivalent weight of said pre-polymer is in the range of 450-10,000, such as 500-7,500, such as 550-5,000, or 550-3,000.

*Application of the coating composition*

The invention further relates to a marine structure having on at least a part of the surface thereof a coating prepared from the antifouling paint composition defined herein. The marine structure may be coated with one or several layers, in particular successive layers, of the coating composition.

The coating composition according to the invention may be applied to a marine structure to be protected in one or several successive layers, typically 1 to 4 layers, preferably 1 to 2 layers. The dry film thickness (DFT) of the coating applied per layer will typically be 10 to 600 μm, preferably 20 to 500 μm, such as 40 to 400 μm. Thus, the total dry film thickness of the coating will typically be 10 to 1,800 μm, preferably 20 to 1,500 μm, in particular 40 to 1,200 μm, such as 80 to 800 μm.

The marine structure to which the coating composition according to the invention may be applied to may be any of a wide variety of solid objects that come into contact with water, for example vessels (including but not limited to boats, yachts, motorboats, motor launches, ocean liners, tugboats, tankers, container ships and other cargo ships, submarines (both nuclear and conventional), and naval vessels of all types); pipes; shore and off-shore machinery, constructions and objects of all types such as piers, pilings, bridge substructures, floatation devices, underwater oil well structures etc; nets and other mariculture installations; cooling plants; and buoys; and is especially applicable to the hulls of ships and boats and to pipes.

Prior to the application of a coating composition to a marine structure, the marine structure may first be coated with a primer-system which may comprise several layers and may be any of the conventional primer systems used in connection with application of coating compositions to marine structures. Thus, the primer system may include an anti-corrosive primer optionally followed by a layer of an adhesion-promoting primer.

The above-mentioned primer system may, for example, be a combination of an epoxy resin having an epoxy equivalent of from 160 to 600 with its curing agent (such as an amino type, a combination of a polyol resin with a polyisocyanate type curing agent, or a coating material containing a vinyl ester resin, an unsaturated polyester resin or the like, as a binder system, and, if required, further containing a thermoplastic resin (such as chlorinated rubber, an acrylic resin or a vinyl chloride resin), a curing accelerator, a rust preventive pigment, a colouring pigment, an extender pigment, a solvent, a silane compound, a plasticizer, an additive (such as an antisagging agent or a precipitation preventive agent), or a tar epoxy resin type coating material, as a typical example.

In view hereof, the present invention also provides a method of coating a structure, comprising the steps of applying to at least a part of the structure thereof layer of an antifouling coating composition as defined herein. In some interesting embodiments, the layer is the final layer of a multi-layer coating system.

*Specific embodiments of the invention*

In one preferred embodiment, the total coating composition (i.e. the base component and any further components) has a solids weight ratio of at least 40 %, such as at least 50 %, such as 60-99 %, or 80-100 %, or even 70-98 %, or 85-100 %.

In a further particular embodiment, the total coating composition has a solids weight ratio of essentially 100 %. It should be understood that the expression "essentially 100 %" is intended to mean that the composition includes no solvents (or other non-reactive volatiles) except for possible traces of volatiles (solvents, residual monomers, etc.) which inevitably may be present in the starting materials of the coating composition. Hence, within this embodiment, no solvents are added.

The solids weight ratio (SWR) is determination in accordance with ISO 3251:2008.

With respect to the self-polishing properties of the antifouling coating composition, it is preferred that polishing rate, as determined in accordance with the Polishing Rate Test defined herein, is at least 1 μm per 10,000 Nautical Miles.

EXAMPLES

*Determination of acid value*

The "acid value" is defined as the number of milligrams (mg) of potassium hydroxide (KOH; $M_w$= 56.1 g/mol) which is necessary for neutralizing 1 gram of a polymer, e.g. a pre-polymer. For the purpose of the present invention, the acid value relates to the pre-polymer wherein the silyl groups have been removed by hydrolysis, hence the pre-polymer having free acid groups instead of silyl ester group.

The acid value may be determined based on the composition of the pre-polymer (i.e. knowledge about the monomer constituents and their relative ratios).

As an example, the acid value may be determined for a pre-polymer made of 50.0 g triisopropylsilyl acrylate monomer (TIPSA; $M_w$=228.4 g/mol) and 50.0 g methyl methacrylate (MMA; $M_w$=100.1 g/mol). As mentioned above, the calculations will be based on the free acid analogue, hence acrylic acid is used in the calculation instead of TIPSA. 50 g TIPSA corresponds to 15.79 g acrylic acid ($M_w$=72.1 g/mol).

The weight fraction of acrylic acid constitutes 24 % (15.8 g/(15.8 g + 50.0 g)*100 %) of the pre-polymer.

The methyl methacrylate monomers constitutes 76 % (50.0 g/(15.8 g+50.0 g)*100 %) of the prepolymer.

1 gram of pre-polymer includes 3.33 mmol (1 g*24 %/72.1 g/mol) of free carboxyl groups.

It requires 187 mg (3.33 mmol * 56.1 mg/mmol) of KOH to neutralize the free carboxyl groups of one gram of the pre-polymer. This value is the acid value (AV).

*Determination of the epoxy equivalent weight (EEW)*

The "Epoxy Equivalent Weight" is defined as the amount (grams) of material that contains 1 mol of epoxy groups (i.e. moieties including an oxirane group).

The EEW may be determined based on the composition of the pre-polymer (i.e. knowledge about the monomer constituents and their relative ratios) or by titration.

As an example, the EEW may be determined for a pre-polymer made of 50.0 g glycidyl methacrylate monomer (GMA; MW= 142.2 g/mol) and 50.0 g methyl methacrylate (MMA; Mw=100.1 g/mol).

The weight fraction of glycidyl methacrylate constitutes 50 % (50.0 g/(50.0 g + 50.0 g)*100 %) of the pre-polymer.

The methyl methacrylate monomers constitutes 50 % (50.0 g/(50.0 g + 50.0 g)*100 %) of the pre-polymer. 1 gram of pre-polymer includes 3.52 mmol (1 g*50 %/142.2 g/mol) of epoxy groups.

The amount (grams) of material that contains 1 mol of epoxy groups is 284 g/mol(1 g/3.52 mmol). This value is the Epoxy Equivalent Weight (EEW).

*Determination of the amine equivalent weight (AEW)*

The "Amine Equivalent Weight" is defined as the amount (grams) of material that contains 1 mol of amine groups (either primary, secondary or tertiary).

The amine equivalent weight can be determined according to the following protocol (based on ISO 9702-1996):

> An amount of "A" grams of an amine-containing sample is accurately weighed out into a dry Erlenmeyer flask. The sample is dissolved in 25 mL of acetonitrile. If not completely dissolved, a few mL of a standardized 0.1 N perchloric acid solution in glacial acid is added from a burette (the amount becomes a part of "p" in the Equation). As soon as the precipitation has disappeared, 4 drops of a Crystal Violet solution (1% in glacial acetic acid) are added. The sample solution is titrated with the remaining part of the standardized 0.1 N perchloric acid solution from the burette until the blue colour changes over blue-green to green and is stable for at least 30 sec. The total amount of perchloric acid solution used is designated "p" mL.

A blind test is conducted using "q" mL of the 0.1 N perchloric acid solution.

The measurements of the sample and "blind", respectively, are repeated and should not deviate more than 3% from the mean value.

The Amine Equivalent Weight (AEW) is calculated from the Equation:

$$AEW = (A * 1000)/((p-q)*N)$$

wherein A is the weight of the sample, p is the mL of perchloric acid solution used for titration of the sample, q is the mL of perchloric acid solution used for the blind test, and N is the exact normality of the approx. 0.1 N perchloric acid solution used for titration.

*Determination of the Amine Hydrogen Equivalent Weight (AHEW)*

Theoretical AHEW calculation:

Based in the structure of the amine molecule, the number of the hydrogen in amine groups that are susceptible to react with epoxy groups (the active hydrogens) are identified as "y," and the $M_w$ of the amine molecule are known. The AHEW is calculated as follow:

$$AHEW = M_w / y$$

*Determination of the Thiol Hydrogen Equivalent Weight (THEW)*

Theoretical THEW calculation:

Based in the structure of the mercaptan molecule, the number of the hydrogen in thiol groups that are susceptible to react with epoxy groups are identified as "y," and the $M_w$ of the mercaptan molecule are known. The THEW is calculated as follow:

$$THEW = M_w / y$$

*Rotor Test*

A stainless steel test panel (13.5 x 7 $cm^2$) with a curvature corresponding to that of a cylindrical drum with a diameter of 1 m is first coated with 150 µm (DFT) of an epoxy primer (Hempadur Primer 45141 ex Hempel A/S). After 24 hours, the panel is coated with 100 µm (DFT) of a commercial epoxy tie coat (HEMPADUR 45182 ex Hempel A/S) applied by air spraying.

After minimum 24 hours drying in the laboratory at room temperature the test paint is applied by air spraying in a DFT of approximately 250 µm. The panel is dried for at least 1 week in the laboratory at room temperature before testing. The initial thickness of the paint system is measured using a coating thickness tester (Kett, LZ-200C).

The rotor is rotated at a peripheral speed of 15 knots for a relative distance of at least 39,000 Nautical miles.

The thickness is controlled with periodic inspections using a coating thickness tester (Kett, LZ-200C). An initial inspection is made before the rotor test. The polishing is the difference between the film thickness measured at a given inspection and the film thickness measured in the initial inspection.

Naoshima test variant.

The test panel is fixed onto the convex surface of a cylindrical drum of 1 m in diameter and is rotated in sea water with a salinity in the range of 31 to 35 parts per thousand at an average temperature of 24 °C at a test site in Naoshima, Japan which is situated at latitude 34 north and longitude 134 east.

Vilanova test variant.

The test panel is fixed onto the convex surface of a cylindrical drum of 1 m in diameter and is rotated in sea water with a salinity in the range of 37-38 parts per thousand at an average temperature of 17-18°C at a test site in Vilanova i la Geltrú in Northeastern Spain, which is situated at latitude 41.13 north and longitude 1.43 east.

*Lab Rotor Test*

Polishing and leaching characteristics are measured using a rotary set-up similar to the one described by Kiil et al. (Kiil, S, Weinell, C E, Yebra, D M, Dam-Johansen, K, "*Marine biofouling protection: design of controlled release antifouling paints.*" In: Ng, K M, Gani, R, Dam-Johansen, K (eds.) Chemical Product Design; Towards a Perspective Through Case Studies, 23IDBN-13: 978-0-444-52217-7. Part II (7), Elsevier. (2006)). The set-up consists of a rotary rig,

which has two concentric cylinders with the inner cylinder (rotor, diameter of 0.3 m and height 0.17 m) capable of rotation. The cylinder pair is immersed in a tank containing about 400-500 litres of Artificial Seawater:

| Composition of Artificial Seawater | |
|---|---|
| Salt | Concentration in g/L |
| NaCl | 32 |
| $MgSO_4 \cdot 7H_2O$ | 14 |
| $NaHCO_3$ | 0.2 |

The tank is fitted with baffles to break the liquid flow, which enhances turbulence and enables faster mixing of the species released from the paints and enhance heat transfer from a thermostating system. The purpose of using two cylinders is to create a close approximation to couette flow (flow between two parallel walls, where one wall moves at a constant velocity). The rotor is operated at 20 knots at 25 °C (unless otherwise specified), and the pH is adjusted frequently to 8.2 using 1 M sodium hydroxide or 1 M hydrochloric acid.

Samples are prepared using overhead transparencies (3M PP2410) that are primed using two-component paint (Hempadur 4518 ex Hempel A/S) applied using a Doctor Blade applicator with a gap size of 200 μm. Coating samples are applied adjacent to each other using a Doctor Blade applicator with a gap of 250 μm. After drying for 1 day, the coated transparency is cut in strips of 2 cm resulting in eight samples of 1.5 x 2 $cm^2$ on a long (21 cm) strip. The strips are mounted on the rotor, and left to dry for a week.

After one week, the test is initiated, and during the experiment, samples are removed after a predetermined number of weeks (w) (see the respective tables) in order to inspect the polishing and leaching depths. The samples are dried for three days at ambient conditions, after which they are cut in half and cast in paraffin. The internal front of the sample is planed off before total film thickness and leached layer thickness are established using light microscopy (coating cross-section inspection).

*Antifouling property test*

An acrylic test panel (10 x 45 $cm^2$), sandblasted on one side to facilitate adhesion of the coating, is first coated with 80 micron (DFT) of a commercial vinyl tar primer (Hempatex 46330 ex Hempel A/S) applied by air spraying. After a minimum drying time of 24 hours in the laboratory at room temperature the test paint is applied by air spraying to a DFT of 90-100 microns. After drying for 72 hours, at least, the test panels are fixed on a rack and immersed in seawater.

The test site Toba is located in Japan on the cost of the Pacific Ocean. In this test site the panels are immersed in seawater. Alternatively, the test site is Vilanova, Spain or Singapore (Singapore test variant: sea water with a salinity in the range of 29-31 parts per thousand at a temperature in the range of 29-31°C, situated at latitude 1° 23' 38.8" (north) and longitude 103° 58' 33.32" (east)). Every 4-8 weeks, inspection of the panels is made and the antifouling performance is evaluated according to the following scale:

| Level | Description |
|---|---|
| EXCELLENT | Only slime |
| GOOD | Algae + Animals < 10% |
| FAIR | 10% < (Algae + Animals) < 25% |
| POOR | Algae + Animals > 25% |

*Water Absorption Test*

Sanded polycarbonate panel (5.7 x 10 x 0.4 cm) is dried for two weeks at 60°C in order to remove all dampness. Panel is placed in the lab at room temperature (RT) until ambient temperature is reached and weighted (Wp1). Panel is applied with the polymer using a doctor blade applicator with 300 microns of clearance, and allowed to dry for 24 h in the lab at RT followed by 72 h in an oven at 45°C. After drying, panel is weighted (Wp2) and the polymer weight is calculated as the difference between the panel weight and the dried applied panel weight (Wp2-Wp1). Panel is completely immersed in artificial sea water (prepared in the same way as in the Lab Rotor test) and placed in the oven at 45°C. Water absorption is inspected after 21 days by removing the panel from immersion, wiping off excess water with soft

paper, allowing the panel to reach lab RT, and weighting (Wpt).

A bare sanded polycarbonate panel (5.7 x 10 x 0.4 cm) that follows the same procedure as the applied panel (Wb2 and Wbt), is used to calculate the water absorbed by the substrate of the applied panel.

The water absorbed by the polymer is calculated as follow:

$$((Wpt-Wp2)-(Wp1x((Wbt-Wb2)/Wb2))/(Wp2-Wp1)x100\ \%$$

In Table 10, the results are normalised to the sample (Pre-polymer 1) without use of a curing agent.

*Preparation of coating compositions*

Procedure of the pre-polymer synthesis:

A pre-mix of the monomers(triisopropylsilyl acrylate, methyl methacrylate, butyl acrylate and glycidyl methacrylate), azobis-methylbutyronitrile, and xylene was prepared in the prescribed proportions and a further quantity of xylene was charged to a temperature-controlled reaction vessel equipped with a stirrer, a reflux condenser, and a pre-mix feed inlet. The reaction vessel was heated and maintained at 125°C and the pre-mix was charged to the reaction vessel at a constant rate for 4 hours. After a further 30 minutes, a pre-mix of the initiator and xylene was charged to the reaction vessel at a constant rate for 1 hour. After a further 30 minutes, the temperature of the reaction vessel was cooled.

Table 1 - Composition of pre-polymers and properties

| The prepolymers contain silylester group(s) and epoxy-functional group(s). | | | | | |
|---|---|---|---|---|---|
| Wt% | Pre-polymer 1 | Pre-polymer 2 | Pre-polymer 3 | Pre-polymer 4 | Pre-polymer 5 |
| Xylene | 17.7 | 17.7 | 17.7 | 16.4 | 17.7 |
| Triisopropyl silylacrylate | 24.0 | 23.7 | 18.5 | 43.6 | 23.7 |
| Methyl methacrylate | 15.6 | 16.4 | 20.1 | 2.2 | 15.4 |
| Butylacrylate | 4.4 | 6.6 | 8.1 | 0.9 | 6.2 |
| Glycidyl methacrylate | 6.0 | 3.3 | 3.3 | 3.3 | 4.7 |
| | | | | | |
| A\Azobis-methylbutylronitrile | 3.2 | 3.2 | 3.2 | 1.6 | 3.2 |
| | | | | | |
| Total | 70.9 | 70.9 | 70.9 | 68.8 | 70.9 |
| Property | | | | | |
| Non-volatiles (30 minutes at 150 °C) | 74.3 | 74.0 | 74.5 | 73.9 | 74.0 |
| Tg (°C) | 22 | 18 | 23 | 2 | 18 |
| Calculated Acid Value | 161 | 158 | 112 | 497 | 158 |
| Calculated Epoxy Equivalent weight (solid resin) | 1260 | 2289 | 2289 | 2220 | 1607 |
| GPC, Mn | 2400 | 2300 | 2400 | 2500 | 2300 |
| GPC, Mw | 4400 | 4400 | 4800 | 4700 | 4400 |
| GPC, MWD | 1.83 | 1.96 | 2.00 | 1.92 | 1.87 |
| Epoxy-functional groups per molecule (calculated average) | 3.5 | 1.9 | 2.1 | 2.1 | 2.7 |
| Silyl groups per molecule (calculated average) | 8.7 | 8.6 | 7.3 | 17.4 | 8.6 |

(continued)

| Wt% | Pre-polymer 6 | Pre-polymer 7 | Pre-polymer 8 | Pre-polymer 9 |
|---|---|---|---|---|
| Xylene | 17.9 | 22.8 | 17.7 | 17.7 |
| Triisopropyl silylacrylate | 36.9 | 23.7 | 27.7 | 22.9 |
| Methyl methacrylate | 5.8 | 23.0 | 13.7 | 15.9 |
| Butylacrylate | 2.3 | | 3.2 | 5.8 |
| Glycidyl methacrylate | 5.0 | 3.3 | 5.4 | 5.4 |
| | | | | |
| A\Azobis-methylbutylronitrile | 3.8 | 3.2 | 3.2 | 3.2 |
| | | | | |
| Total | 71.7 | 76.0 | 70.9 | 70.9 |
| Property | | | | |
| Non-volatiles (30 minutes at 150 °C) | 73.5 | 69.8 | 74.4 | 73.4 |
| Tg (°C) | 7 | 41 | 20 | 20 |
| Calculated Acid Value | 319 | 158 | 200 | 150 |
| Calculated Epoxy Equivalent weight (solid resin) | 1528 | 2289 | 1401 | 1401 |
| GPC, Mn | 1800 | 2400 | 2300 | 2400 |
| GPC, Mw | 3100 | 4700 | 4600 | 4600 |
| GPC. MWD | 1.67 | 1.92 | 2.00 | 1.90 |
| Epoxy-functional groups per molecule (calculated average) | 2.0 | 2.1 | 3.3 | 3.3 |
| Silyl groups per molecule (calculated average) | 9.3 | 9.2 | 10.5 | 8.7 |

The polymers are characterized by Gel Permeation Chromatography (GPC) measurement. The molecular weight distribution (MWD) was determined using a HLC-8220 instrument with two TSKgel SuperMultiporeHZ-M columns from Tosoh, tetrahydrofuran (THF) as eluent at 40 °C and at a constant flow rate of 0.350 mL/min and with a refractive index (RI) detector. The columns were calibrated using polystyrene standards. The samples prepared by dissolving an amount of polymer solution corresponding to 40 mg dry polymer in 10 mL THF.

Table 2 - curing agents

| | Type | Hydrogen equivalent weight | Amine equivalent weight | Thiol equivalent weight |
|---|---|---|---|---|
| Curing agent 1 | Aliphatic amine Diethylenetriamine (DETA ex Akzo) | 21 | 35 | - |
| Curing agent 2 | polyoxyalkylene amine Polyoxypropylene diamine + Nonyl phenol (Ancamine 1784 ex Air Products) | 90 | 184 | - |
| Curing agent 3 | Arilyl amine Meta xylylene diamine - MXDA (Aramine 31-487 ex Bitrez) | 34 | 68 | - |
| Curing agent 4 | Aliphatic amine Diethylaminopropylamine (Diethylaminopropylamine ex BASF) | 65 | 65 | - |

(continued)

| | Type | Hydrogen equivalent weight | Amine equivalent weight | Thiol equivalent weight |
|---|---|---|---|---|
| Curing agent 5 | Aromatic polymercaptan (Zisnet DB ex Sankyo-Kasai) | 136 | - | 136 |
| Curing agent 6 | Mercaptan terminated polymer (GPM-800 ex Gabriel Performance Products) | 170 | - | 170 |
| Curing agent 7 | Adduct* of curing agent 3 and alkylated phenyl monoglycidylether (Cardolite NC 513 ex Cardanol Chemicals)" | | | |
| * Curing agent 7 is prepared according to the following method: 40.7 g of the reactive diluent (Cardolite NC 513) are added to 5.5 g of the amine (Meta xylylene diamine) and stirred for 30 minutes. After 2 days, 13.9 g of xylene is added. | | | | |

Preparation of coating compositions

In each instance, the Base component was prepared by grinding of all raw materials with glass beads for 30 min. The grain size obtained was about 50 μm. Insofar zinc resintate was used (see the tables below), this was dissolved in the solvent prior to grinding.

The Model Paints were prepared by simple mixing of the constituents of the Base component and the Second component. The Base component and the Second component were mixed at 25 °C immediately prior to application of the paint composition in accordance with the respective test(s), cf. the test descriptions further above.

Insofar the curing agent of the Second component was in solid form, the curing agent was dissolved in a suitable solvent, cf. the tables below. For a Second component with Zisnet DB, Zisnet DB and triphenyl phosphine were added to the solvent and stirred until they had dissolved. For a second component with GPM800: triphenyl phosphine was dissolved in the solvent and stirred until dissolved, and was then added to GPM800 and stirred until mixed.

Tables 3 to 6 - Basic formulation of model paints

| | Model paint 1 | | Model paint 2 | | Model paint 3 | |
|---|---|---|---|---|---|---|
| | %Wet Weight | %Solid Volume | %Wet weight | %Solid Volume | %Wet weight | %Solid Volume |
| **Base component** | | | | | | |
| Pre-polymer 1 | 24.7 | 57.3 | 24.7 | 57.7 | 24.9 | 59.3 |
| Zinc oxide | 27.8 | 17.2 | 27.9 | 17.3 | 28.1 | 17.8 |
| Cuprous oxide | 30.5 | 17.2 | 30.6 | 17.3 | 30.8 | 17.8 |
| Additive | 2.0 | 3.7 | 2.0 | 3.8 | 2.1 | 4.0 |
| Xylene | 13.7 | | 13.7 | | 13.8 | |
| **Second Component** | | | | | | |
| 1 | 1.3 | 4.6 | 1.1 | 3.9 | 0.3 | 1.1 |
| Curing agent Total | 100 | 100 | 100 | 100 | 100 | 100 |
| | | | | | | |

(continued)

| | Model paint 4 | | Model paint 5 | | Model paint 6 | |
|---|---|---|---|---|---|---|
| | %Wet Weight | %Solid Volume | %Wet weight | %Solid Volume | %Wet weight | %Solid Volume |
| **Base component** | | | | | | |
| Pre-polymer 1 | 23.9 | 51.6 | 24.1 | 52.8 | 24.7 | 57.2 |
| Zinc oxide | 27.0 | 15.5 | 27.2 | 15.8 | 27.8 | 17.2 |
| Cuprous oxide | 29.6 | 15.5 | 29.8 | 15.8 | 30.5 | 17.2 |
| Additive | 2.0 | 3.4 | 2.0 | 3.6 | 2.0 | 3.8 |
| Xylene | 13.3 | | 13.4 | | 13.7 | |
| **Second Component** | | | | | | |
| 2 | 4.2 | 14.0 | 3.5 | 12.0 | 1.3 | 4.6 |
| Curing agent Total | 100 | 100 | 100 | 100 | 100 | 100 |
| | | | | | | |
| | Model paint 7 | | Model paint 8 | | Model paint 9 | |
| | %Wet Weight | %Solid Volume | %Wet weight | %Solid Volume | %Wet weight | %Solid Volume |
| **Base component** | | | | | | |
| Pre-polymer 1 | 24.6 | 56.7 | 24.6 | 57.2 | 24.9 | 59.0 |
| Zinc oxide | 27.7 | 17.0 | 27.8 | 17.2 | 28.0 | 17.7 |
| Cuprous oxide | 30.4 | 17.0 | 30.5 | 17.2 | 30.8 | 17.7 |
| Additive | 2.0 | 3.9 | 2.0 | 3.8 | 2.0 | 4.0 |
| Xylene | 13.6 | | 13.7 | | 13.8 | |
| **Second Component** | | | | | | |
| Curing agent 3 | 1.7 100 | 5.4 | 1.4 | 4.6 | 0.5 | 1.6 |
| Total | | 100 | 100 | 100 | 100 | 100 |
| | | | | | Base component | |
| | | | | | %Wet Weight | %Solid Volume |
| | | | | | | |
| Pre-polymer 1 | | | | | 25.0 | 60.0 |
| Zinc oxide | | | | | 28.2 | 18.0 |
| Cuprous oxide | | | | | 30.9 | 18.0 |
| Additive | | | | | 2.1 | 4.0 |
| Xylene | | | | | 13.9 | |
| **Second component** | | | | | | |

(continued)

| | Base component | |
|---|---|---|
| | %Wet Weight | %Solid Volume |
| | 0 | 0 |
| Total | 100 | 100 |

Table 7 - Basic formulation of model paints

| | Model paint 10 | | Model paint 11 | | Model paint 12 | |
|---|---|---|---|---|---|---|
| | %Wet Weight | %Solid Volume | %Wet weight | %Solid Volume | %Wet weight | %Solid Volume |
| **Base component** | | | | | | |
| Pre-polymer 1 | 24.6 | 56.1 | 24.6 | 56.7 | 24.8 | 57.7 |
| Zinc oxide | 27.7 | 16.8 | 27.8 | 17.0 | 27.9 | 17.3 |
| Cuprous oxide | 30.4 | 16.8 | 30.5 | 17.0 | 30.6 | 17.3 |
| Additive | 2.0 | 3.8 | 2.0 | 3.8 | 2.0 | 3.8 |
| Xylene | 13.7 | | 13.7 | | 13.7 | |
| **Second component** | | | | | | |
| Curing agent 4 | 1.6 | 6.5 | 1.4 | 5.5 | 1.0 | 3.9 |
| Total | 100 | 100 | 100 | 100 | 100 | 100 |
| | | | | | | |
| | Model paint 13 | | Model paint 14 | | Model paint 15 | |
| | %Wet Weight | %Solid Volume | %Wet weight | %Solid Volume | %Wet weight | %Solid Volume |
| **Base component** | | | | | | |
| Pre-polymer 2 | 24.2 | 51.8 | | | | |
| Pre-polymer 3 | | | 24.0 | 51.7 | | |
| Pre-polymer 4 | | | | | 23.9 | 51.3 |
| Cuprous oxide | 51.3 | 26.8 | 51.4 | 26.8 | 51.0 | 26.8 |
| Zinc resinate | 1.8 | 5.8 | 1.8 | 5.8 | 1.8 | 5.7 |
| Pigment | 5.2 | 3.8 | 5.3 | 3.8 | 5.2 | 3.8 |
| Rheologic agent | 2.2 | 1.9 | 2.2 | 1.9 | 2.8 | 2.4 |
| Bioactive agent | 3.2 | 5.8 | 3.2 | 5.8 | 3.2 | 5.7 |
| Xylene | 2.4 | - | 2.4 | - | 2.4 | - |
| **Second component** | | | | | | |
| Curing agent 5 | 1.1 | 2.7 | 1.1 | 2.7 | 1.1 | 2.8 |
| Triphenylphosphine | 0.5 | 1.4 | 0.5 | 1.4 | 0.5 | 1.5 |
| Methyl Ethyl Ketone | 8.1 | | 8.1 | | 8.2 | |
| Total | 100 | 100 | 100 | 100 | 100 | 100 |

(continued)

| | Model paint 16 | | Model paint 17 | | Model paint 18 | |
|---|---|---|---|---|---|---|
| | %Wet Weight | %Solid Volume | %Wet weight | %Solid Volume | %Wet weight | %Solid Volume |
| **Base component** | | | | | | |
| Pre-polymer 5 | 23.8 | 51.1 | | | | |
| Pre-polymer 6 | | | 23.6 | 50.6 | | |
| Pre-polymer 7 | | | | | 25.5 | 51.7 |
| Cuprous oxide | 50.5 | 26.5 | 50.0 | 26.5 | 50.3 | 26.8 |
| Zinc resinate | 1.8 | 5.7 | 1.8 | 5.6 | 1.8 | 5.7 |
| Pigment | 5.2 | 3.8 | 5.1 | 3.8 | 5.1 | 3.8 |
| Rheolnqic agent | 2.2 | 1.9 | 2.7 | 2.4 | 2.2 | 1.9 |
| Bioactive agent | 3.2 | 5.7 | 3.1 | 5.7 | 3.1 | 5.7 |
| Xylene | 2.3 | - | 2.3 | - | 2.3 | - |
| **Second component** | | | | | | |
| Curing agent 5 | 1.5 | 3.9 | 1.5 | 4.0 | 1.1 | 2.8 |
| Triphenylphosphine | 0.5 | 1.4 | 0.5 | 1.5 | 0.5 | 1.5 |
| Methyl Ethyl Ketone | 9.0 | | 9.3 | | 8.0 | |
| Total | 100 | 100 | 100 | 100 | 100 | 100 |
| | | | | | | |
| | Model paint 19 | | Model paint 20 | | Model paint 21 | |
| | %Wet Weight | %Solid Volume | %Wet weight | %Solid Volume | %Wet weight | %Solid Volume |
| **Base component** | | | | | | |
| Pre-polymer 2 | 24.2 | 52.1 | 26.0 | 51.3 | | |
| Pre-polymer 3 | | | | | 25.8 | 51.3 |
| Cuprous oxide | 51.4 | 27.0 | 55.0 | 26.6 | 55.2 | 26.6 |
| Zinc resinate | 1.8 | 5.8 | 2.0 | 5.7 | 2.0 | 5.7 |
| Pigment | 5.3 | 3.9 | 5.6 | 3.8 | 5.6 | 3.8 |
| Rheologic agent | 2.2 | 1.9 | 2.4 | 1.9 | 2.4 | 1.9 |
| Bioactive agent | 3.2 | 5.8 | 3.4 | 5.7 | 3.4 | 5.7 |
| Xylene | 2.4 | - | 2.6 | - | 2.6 | - |
| **Second component** | | | | | | |
| Curing agent 5 | 1.1 | 2.8 | | | | |
| Curing agent 6 | | | 1.4 | 3.6 | 1.4 | 3.6 |
| Triphenylphosphine | 0.3 | 0.7 | 0.5 | 1.3 | 0.5 | 1.3 |
| Methyl Ethyl Ketone | 8.1 | | | | | |
| Xylene | | | 1.0 | | 1.0 | |
| Total | 100 | 100 | 100 | 100 | 100 | 100 |

(continued)

| | Model paint 22 | | Model paint 23 | | Model paint 31 | |
|---|---|---|---|---|---|---|
| | %Wet Weight | %Solid Volume | %Wet weight | %Solid Volume | %Wet weight | %Solid Volume |
| **Base component** | | | | | | |
| Pre-polymer 2 | 24.7 | 52.1 | | | | |
| Pre-polymer 3 | | | 24.1 | 52.1 | 25.0 | 47.0 |
| Cuprous oxide | 52.5 | 27.0 | 51.5 | 27.0 | 53.5 | 24.4 |
| Zinc resinate | 1.9 | 5.8 | 1.8 | 5.8 | 1.9 | 5.2 |
| Pigment | 5.4 | 3.9 | 5.3 | 3.9 | 5.5 | 3.5 |
| Rheologic agent | 2.3 | 1.9 | 2.2 | 1.9 | 2.3 | 1.7 |
| Bioactive agent | 3.3 | 5.8 | 3.2 | 5.8 | 3.3 | 5.2 |
| Xylene | 2.4 | - | 2.4 | - | 2.4 | - |
| **Second component** | | | | | | |
| Curing agent 5 | 0.8 | 2.1 | 1.1 | 2.8 | | |
| Curing agent 7 | | | | | 6.0 | 12.9 |
| Triphenylphosphine | 0.5 | 1.4 | 0.3 | 0.7 | | |
| Methyl Ethyl Ketone | 6.2 | | 8.1 | | | |
| Total | 100 | 100 | 100 | 100 | 100 | 100 |

(continued)

| | Model paint 24 | | Model paint 25 | | |
|---|---|---|---|---|---|
| | %Wet Weight | %Solid Volume | %Wet weight | %Solid Volume | |
| **Base component** | | | | | |
| Pre-polymer 8 | 24.4 | 52.6 | 16.4 | 39.1 | |
| Pre-polymer 9 | | | | | |
| Reactive diluent HD | | | 3.1 | 9.8 | |
| Reactive diluent NEO-S | 0.2 | 0.5 | | | |
| Plasticizer | 1.0 | 2.8 | 0.8 | 2.6 | |
| Zinc oxide | 6.7 | 3.4 | 5.6 | 3.2 | |
| Cuprous oxide | 47.6 | 24.0 | 40.3 | 22.4 | |
| Pigment | 5.4 | 3.3 | 4.5 | 3.1 | |
| Copper pyrithione | 1.9 | 2.8 | 1.6 | 2.6 | |
| Additive | 3.9 | 7.0 | 3.2 | 6.6 | |
| Xylene | 2.9 | - | 3.4 | - | |
| **Second component** | | | | | |
| Curing agent 5 | 0.9 | 2.2 | 3.7 | 9.6 | |
| Triphenylphosphine | 0.5 | 1.4 | 0.4 | 1.0 | |
| Tetrahydrofuran | 4.6 | - | 18.0 | - | |
| Total | 100 | 100 | 100 | 100 | |
| | Model paint 26 | | Model paint 27 | | |
| | %Wet Weight | %Solid Volume | %Wet weight | %Solid Volume | |
| **Base component** | | | | | |
| Pre-polymer B | | | | | |
| Pre-polymer 9 | 16.2 | 39.2 | 15.9 | 38.4 | |
| Reactive diluent HD | 3.0 | 9.8 | 3.0 | 9.6 | |
| Reactive diluent NEO-S | | | 0.4 | 1.3 | |
| Plasticizer | 0.8 | 2.6 | 0.8 | 2.6 | |
| Zinc oxide | 5.5 | 3.2 | 5.4 | 3.1 | |
| Cuprous oxide | 39.2 | 22.2 | 38.5 | 21.8 | |
| Pigment | 4.6 | 3.3 | 4.5 | 3.3 | |
| Copper pyrithione | 1.6 | 2.6 | 1.5 | 2.5 | |
| Additive | 3.2 | 6.5 | 3.1 | 6.4 | |
| Xylene | 3.4 | - | 3.4 | - | |
| **Second component** | | | | | |

(continued)

| | Model paint 26 | | Model paint 27 | |
|---|---|---|---|---|
| | %Wet Weight | %Solid Volume | %Wet weight | %Solid Volume |
| Curing agent 5 | 3.7 | 9.6 | 3.9 | 10.0 |
| Triphenylphosphine | 0.4 | 1.0 | 0.4 | 1.0 |
| Tetrahydrofuran | 18.4 | - | 19.3 | - |
| Total | 100 | 100 | 100 | 100 |

| | Model paint 28 | | Model paint 29 | |
|---|---|---|---|---|
| | %Wet weight | %SV | %Wet weight | %SV |
| **Base component** | | | | |
| Pre-polymer 8 | 15.9 | 38.3 | 12.4 | 31.5 |
| Reactive diluent HD | 3.0 | 9.6 | 4.7 | 15.7 |
| Reactive diluent NEO-S | 0.4 | 1.3 | | |
| Plasticizer | 0.8 | 2.6 | 0.7 | 2.5 |
| Zinc oxide | 5.4 | 3.1 | 5.1 | 3.1 |
| Pigment | 4.4 | 3.1 | 4.2 | 3.1 |
| Cuprous oxide | 38.9 | 22.0 | 36.2 | 21.5 |
| Copper pyrithione | 1.6 | 2.6 | 1.4 | 2.5 |
| Additive | 3.1 | 6.4 | 2.9 | 6.3 |
| Xylene | 3.3 | - | 3.5 | - |
| **Second component** | | | | |
| Curing agent 5 (Zisnet | 3.8 | 10.0 | 4.8 | 13.0 |
| DB) | | | | |
| Triphenylphosphine | 0.4 | 1.0 | 0.3 | 0.8 |
| THF | 19.2 | - | 23.8 | - |
| Total | 100 | 100 | 100 | 100 |

| | Model paint 30 | |
|---|---|---|
| | %Wet weight | %SV |
| **Base component** | | |
| Pre-polymer 8 | 12.2 | 30.7 |
| Reactive diluent HD | 4.6 | 15.3 |
| Reactive diluent NEO-S | 0.5 | 1.7 |
| Plasticizer | 0.7 | 2.5 |
| Zinc oxide | 4.9 | 3.0 |

(continued)

| | Model paint 30 | |
|---|---|---|
| | %Wet weight | %SV |
| Pigment | 4.1 | 3.1 |
| Cuprous oxide | 35.3 | 20.9 |
| Copper pyrithione | 1.4 | 2.4 |
| Additive | 2.8 | 6.1 |
| Xylene | 3.5 | - |
| **Second component** | | |
| Curing agent 5 | 4.9 | 13.5 |
| Triphenylphosphine | 0.3 | 0.8 |
| THF | 24.7 | - |
| Total | 100 | 100 |

*Results*

Table 8

| Model paint | Characteristics of pre-polymer used In composition | | | | | | | | | Polishing DFT decrease at 20 knots (Lab Rotor Test) | | |
|---|---|---|---|---|---|---|---|---|---|---|---|---|
| Comp | AV | EEW | Tg | MW | Epoxy per molecule | Silyl groups per molecul e | Stoichiometric ratio H/E | Stoichiometric ratio A/E | Curing agent | 4 w | 8 w | 12 w |
| Paint 1 | 161 | 1260 | 22 | 4400 | 3.5 | 8.7 | 4.2 | 2.5 | 1 | 17 | 11 | # |
| Paint 2 | 161 | 1260 | 22 | 4400 | 3.5 | 8.7 | 3.4 | 2.0 | 1 | 12 | 31 | 36 |
| Paint 3 | 161 | 1260 | 22 | 4400 | 3.5 | 8.7 | 1 | 0.6 | 1 | 26 | 35 | 69 |
| Paint 4 | 161 | 1260 | 22 | 4400 | 3.5 | 8.7 | 3.3 | 1.6 | 2 | 14 | 23 | 68 |
| Paint 5 | 161 | 1260 | 22 | 4400 | 3.5 | 8.7 | 2.8 | 1.4 | 2 | 3 | 13 | 73 |
| Paint 6 | 161 | 1260 | 22 | 4400 | 3.5 | 8.7 | 1 | 0.5 | 2 | 25 | 28 | 71 |
| Paint 7 | 161 | 1260 | 22 | 4400 | 3.5 | 8.7 | 3.4 | 1.7 | 3 | 2 | 12 | # |
| Paint 8 | 161 | 1260 | 22 | 4400 | 3.5 | 8.7 | 2.9 | 1.5 | 3 | 4 | 16 | 49 |
| Paint 9 | 161 | 1260 | 22 | 4400 | 3.5 | 8.7 | 1 | 0.5 | 3 | 9 | 19 | 36 |
| Base component | 161 | 1260 | 22 | 4400 | 3.5 | 8.7 | 0 | 0 | - | 0 | 15 | 61 |
| Globic SAP (*) | | | | | | | | | | 3 | 29 | 69 |

(*) Commercial top-tier self-polishing antifouling coating composition from Hempel A/S (reference).

| Table 8 | Characteristics of pre-polymer used in composition | | | | | | | | | Polishing DFT decrease at 20 knots (Lab Rotor Test) | | |
|---|---|---|---|---|---|---|---|---|---|---|---|---|
| Model paint | AV | EEW | Tg | MW | Epo xy per mol ecule | Silyl groups per molecule | Stoichi ometric ratio H/E | Stoichi ometric ratio A/E | Curing agent | 4w | 9w | 12w |
| Paint 10 | 161 | 1260 | 22 | 4400 | 3.5 | 8.7 | 1.7 | 1.7 | 4 | 21 | | 28 |
| Paint 11 | 161 | 1260 | 22 | 4400 | 3.5 | 8.7 | 1.4 | 1.4 | 4 | 25 | | 35 |
| Paint 12 | 161 | 1260 | 22 | 4400 | 3.5 | 8.7 | 1.0 | 1.0 | 4 | 27 | | 38 |
| Paint 13 | 158 | 2289 | 18 | 4400 | 1.9 | 8.6 | 1.0 | | 5 | | 3 | |
| Paint 14 | 112 | 2289 | 23 | 4800 | 2.1 | 7.3 | 1.0 | | 5 | | 5 | |
| Paint 15 | 497 | 2220 | 2 | 4700 | 2.1 | 17.4 | 1.0 | | 5 | | 3 | |
| Paint 16 | 158 | 1607 | 18 | 4400 | 2.7 | 8.6 | 1.0 | | 5 | | 3 | |
| Paint 17 | 319 | 1528 | 7 | 3100 | 2.0 | 9.3 | 1.0 | | 5 | | 4 | |
| Paint 18 | 158 | 2289 | 41 | 4700 | 2.1 | 9.2 | 1.0 | | 5 | | 3 | |
| Paint 19 | 158 | 2289 | 18 | 4400 | 1.9 | 8.6 | 1.0 | | 5 | | 4 | |
| Paint 20 | 158 | 2289 | 18 | 4400 | 1.9 | 8.6 | 1.0 | | 6 | | 5 | |
| Paint 21 | 112 | 2289 | 23 | 4800 | 2.1 | 7.3 | 1.0 | | 6 | | 7 | |
| Paint 22 | 158 | 2289 | 18 | 4400 | 1.9 | 8.6 | 0.75 | | 5 | | 3 | |

(continued)

| Table 8 | Characteristics of pre-polymer used in composition | | | | | | | | | Polishing DFT decrease at 20 knots (Lab Rotor Test) | | |
|---|---|---|---|---|---|---|---|---|---|---|---|---|
| Model paint | AV | EEW | Tg | MW | Epo xy per mol ecule | Silyl groups per molecule | Stoichi ometric ratio H/E | Stoichi ometric ratio A/E | Curing agent | 4w | 9w | 12w |
| Paint 23 | 112 | 2289 | 23 | 4800 | 2.1 | 7.3 | 1.0 | | 5 | | 5 | |
| Paint 31 | 112 | 2289 | 23 | 4800 | 2.1 | 7.3 | 1.0 | | 7 | | 3 | |
| # It was not possible to determine the polishing rate due to peeling. It is contemplated that the physical properties of these compositions can be improved by adding rosin (or derivatives thereof) and/or a plasticizer, and even further improved by adding fibres. Table 8 (cont.) | | | | | | | | | | | | |

Table 9

| Table 9 | Characteristics of pre-polymer used in composition | | | | | | Stoichiometric ratio H/E | Reactive diluent (Wet wt%) | | Curing agent | Polishing DFT decrease at 15 knots (Naoshima Rotor Test) |
|---|---|---|---|---|---|---|---|---|---|---|---|
| Comp | AV | EEW | Tg | MW | Epoxy per molecule | Silyl groups per molecule | | HD | NEO-S | | 28w |
| Paint 24 | 200 | 1401 | 20 | 4600 | 3.3 | 10.5 | 0.5 | - | 0.2 | 5 | 11 l |
| Paint 25 | 200 | 1401 | 20 | 4600 | 3.3 | 10.5 | 1.0 | 3.1 | - | 5 | 18 |
| Paint 26 | 150 | 1401 | 20 | 4600 | 3.3 | 8.7 | 1.0 | 3.0 | - | 5 | 2 |
| Paint 27 | 150 | 1401 | 20 | 4600 | 3.3 | 8.7 | 1.0 | 3.0 | 0.4 | 5 | 17 |
| Paint 28 | 200 | 1401 | 20 | 4600 | 3.3 | 10.5 | 1.0 | 3.0 | 0.4 | 5 | 23 |
| Paint 29 | 200 | 1401 | 20 | 4600 | 3.3 | 10.5 | 1.0 | 4.7 | - | 5 | 11 |
| Paint 30 | 200 | 1401 | 20 | 4600 | 3.3 | 10.5 | 1.0 | 4.6 | 0.5 | 5 | 15 |

Comments: The use of two reactive diluents like NEO-S and HD in the same paint increases the polishing compared to paints that only use HD (see model paints 26 and 27, 25 and 28, 29 and 30).

Table 10 - Water absorption test

| Pre-polymer | Curing agent | Stoichiometric ratio H/E | absorption after 21 days [normalised] |
|---|---|---|---|
| Pre-polymer 1 | [none] | 0 | 100 |
| Pre-polymer 1 | 1 | 1 | 22 |
| Pre-polymer 1 | 3 | 1 | 12 |

Comments: It is observed that after curing the water absorption is reduced significantly compared to the uncured Pre-polymer 1. The water absorption should be as low as possible to minimise mechanical problems such as blistering, cracking and peeling.

## Claims

1. A self-polishing antifouling coating composition comprising

   a. a base component comprising a pre-polymer which has at least one epoxy-functional group and at least one side chain bearing at least one terminal group of the general formula (I):

      wherein X designates a carbonyl group (>C=O), n is an integer of 0-5,000,

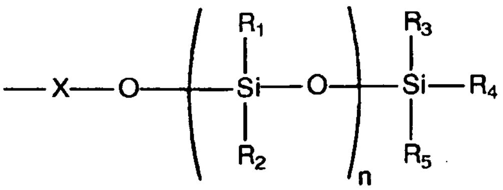

(I)

      and $R_1$, $R_2$, $R_3$, $R_4$ and $R_5$ are each independently selected from $C_{1-20}$-alkyl and optionally substituted phenyl; and

   b. a curing agent having at least one active hydrogen.

2. The composition according to claim 1, wherein the pre-polymer has a backbone consisting of (meth)acrylate-type monomers.

3. The composition according to any one of claims 1-2, wherein the curing agent is selected from amines, such as diamines and polyamines.

4. The composition according to claim 3, wherein the amine is in the form of a boron trifluoride complex.

5. The composition according to any one of claims 1-2, wherein the curing agent Is selected from amine epoxy adducts.

6. The composition according to any one of claims 1-2, wherein the curing agent is selected from polymercaptans, such as aliphatic polymercaptans, cycloaliphatic polymercaptans, aromatic polymercapatans, and thiol-terminated polymers, in particular the curing agent is selected from pentaerythritol tetrakis (3-mercaptobutylate), 1,4-bis(3-mercaptobutyryloxy) butane, 1,3,5-tris(3-mercaptobutyryloxyethyl-1,3,5-triazine-2,4,6(1H,3H,5H)-trion, pentaerythritol tetrakis (3-mercaptopropionate), 2,4,6-trimercapto-s-triazine-mono sodium salt, 2-dibutylamino-4,6-dimercapto-s-triazine, 2-anilino-4,6-dimercapto-s-triazine, and 2,4,6-trimercapto-s-triazine.

7. The composition according to any one of the claims 1 and 6, which further comprises one or more accelerators, preferably the one or more accelerators are selected from tertiary amines, phosphorous compounds, alcohols, and

organic acids, in particular the at least one accelerator is a phosphorous compound, such as selected from phosphorous compounds such as triphenyl phosphine, 1,2-bis(diphenylphosphino) ethane, diphenylphosphinouschloride, tri-o-tolylphosphine, tri-m-tolylphosphine, tri-p-tolylphosphine, tris(p-methoxyphenyl)-phosphine, diphenylcyclohexylphosphine, tricyclohexylphosphine, tributylphosphine, tri-tert-butylphosphine, tri-n-octylphosphine, diphenylphosphinostyrene, 1,3-bis(diphenylphosphino) propane, and 1,4-bis(diphenylphosphino) butane.

**8.** The composition according to any one of the preceding claims, wherein the terminal group of the general formula (I) is a terminal group of the general formula (II)

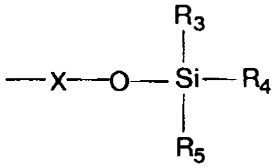

(II)

wherein X, $R_3$, $R_4$ and $R_5$ are as defined in claim 1.

**9.** The composition according to any one of the preceding claims, wherein $R_1$, $R_2$, $R_3$, $R_4$ and $R_5$ are each independently selected from $C_{1-6}$-alkyl.

**10.** The composition according to any one of the preceding claims, wherein the epoxy equivalent weight of the prepolymer is in the range of 450-10,000.

**11.** The composition according to any one of the preceding claims, wherein the weight average molecular weight of the pre-polymer is in the range of 2,000-100,000.

**12.** The composition according to any one of the preceding claims, wherein the total coating composition has a solids weight ratio of at least 40 %.

**13.** A kit comprising the antifouling paint composition as defined in any one of the preceding claims, wherein a first container holds the base component, and wherein a second container holds the curing agent.

**14.** A kit comprising the antifouling paint composition as defined in any one of the claims 7-12, wherein a first container holds the base component and the curing agent, and wherein a second container holds the one or more accelerators.

**15.** A base component for an antifouling paint composition, said component comprising a base component comprising an epoxy-functional pre-polymer having at least one side chain bearing at least one terminal group of the general formula I:

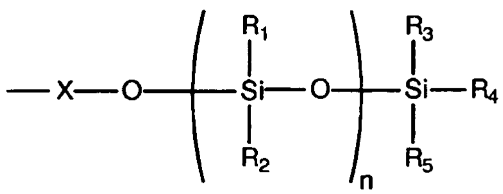

(I)

wherein X designates a carbonyl group (>C=O), n is an integer of 0-5,000, and $R_1$, $R_2$, $R_3$, $R_4$ and $R_5$ are each independently selected from $C_{1-20}$-alkyl and optionally substituted phenyl; wherein the epoxy equivalent weight of said pre-polymer is in the range of 450-10,000.

**16.** The base component according to claim 15, wherein the pre-polymer has a backbone consisting of (meth)acrylate-type monomers.

**17.** The base component according to any one of the claims 15-16, wherein the terminal group of the general formula (I) is a terminal group of the general formula (II)

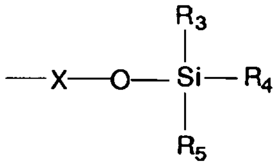

(II)

wherein X, $R_3$, $R_4$ and $R_5$ are as defined in claim 15.

**18.** The composition according to any one of the claims 15-17, wherein $R_1$, $R_2$, $R_3$, $R_4$ and $R_5$ are each independently selected from $C_{1-6}$-alkyl.

**19.** The composition according to any one of the claims 15-18, wherein the epoxy equivalent weight of the pre-polymer is in the range of 450-10,000.

**20.** A marine structure having on at least a part of the surface thereof a coating prepared from the antifouling paint composition according to any one of claim 1-12.

**21.** A method of coating a structure, comprising the steps of applying to at least a part of the structure thereof layer of an antifouling coating composition as defined in any one of the claims 1-12.

**Patentansprüche**

**1.** Selbstpolierende Antifouling-Beschichtungszusammensetzung, umfassend

a. einen Basisbestandteil, der ein Präpolymer umfasst, der mindestens eine Epoxyfunktionsgruppe und mindestens eine Seitenkette aufweist, die mindestens eine endständige Gruppe der folgenden allgemeinen Formel (I) aufweist:

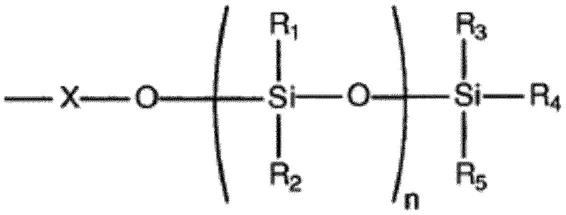

(I)

wobei X eine Carbonylgruppe (>C=0) bezeichnet, n eine ganze Zahl von 0 bis 5.000 ist und $R_1$, $R_2$, $R_3$, $R_4$ und $R_5$ jeweils unabhängig ausgewählt sind aus $C_{1-20}$-Alkyl und wahlweise substituiertem Phenyl; und

b. ein Härtungsmittel mit mindestens einem aktiven Wasserstoff.

**2.** Zusammensetzung nach Anspruch 1, wobei das Präpolymer ein Grundgerüst aufweist, das aus Monomeren vom (Meth)acrylat-Typ besteht.

**3.** Zusammensetzung nach einem der Ansprüche 1 bis 2, wobei das Härtungsmittel ausgewählt ist aus Aminen wie Diaminen und Polyaminen.

**4.** Zusammensetzung nach Anspruch 3, wobei das Amin in Form eines Bortrifluoridkomplexes vorliegt.

**5.** Zusammensetzung nach einem der Ansprüche 1 bis 2, wobei das Härtungsmittel ausgewählt ist aus Aminepoxyaddukten.

**6.** Zusammensetzung nach einem der Ansprüche 1 bis 2, wobei das Härtungsmittel ausgewählt ist aus Polymercaptanen wie aliphatischen Polymercaptanen, cycloaliphatischen Polymercaptanen, aromatischen Polymercaptanen und thiol-terminierten Polymeren, wobei das Härtungsmittel insbesondere ausgewählt ist aus Pentaerythritoltetrakis(3-mercaptobutylat), 1,4-bis(3-Mercaptobutyryloxy)butan, 1,3,5-Tris(3-mercaptobutyryloxyethyl-1,3,5-triazin-2,4,6(1H,3H,5H)-trion, Pentaerythritoltetrakis(3-mercaptopropionat), 2,4,6-Trimercapto-s-triazin-mononatriumsalz, 2-Dibutylamino-4,6-dimercapto-s-triazin, 2-Anilino-4,6-dimercapto-s-triazin und 2,4,6-Trimercapto-s-triazin.

**7.** Zusammensetzung nach einem oder mehreren der Ansprüche 1 und 6, die ferner einen oder mehrere Beschleuniger umfassen, wobei der eine oder die mehreren Beschleuniger vorzugsweise ausgewählt sind aus tertiären Aminen, Phosphorverbindungen, Alkoholen und organischen Säuren, wobei der mindestens eine Beschleuniger insbesondere eine Phosphorverbindung ist, die ausgewählt ist aus Phosphorverbindungen wie Triphenylphosphin, 1,2-Bis(diphenylphosphino)ethan, Diphenylphosphinouschlorid, Tri-o-tolylphosphin, Tri-m-tolylphosphin, Tri-p-tolylphosphin, Tris(p-methoxyphenyl)-phosphin, Diphenylcyclohexylphosphin, Tricyclohexylphosphin, Tributylphosphin, Tri-tert-butylphosphin, Tri-n-octylphosphin, Diphenylphosphinostyrol, 1,3-Bis(diphenylphosphino)propan und 1,4-Bis(diphenylphosphino)butan.

**8.** Zusammensetzung nach einem der vorhergehenden Ansprüche, wobei die endständige Gruppe der allgemeinen Formel (I) eine endständige Gruppe der folgenden allgemeinen Formel (II) ist

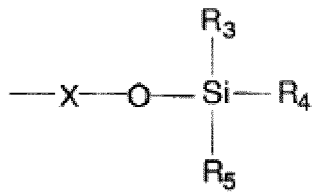

(II)

wobei X, $R_3$, $R_4$ und $R_5$ wie in Anspruch 1 definiert sind.

**9.** Zusammensetzung nach einem der vorhergehenden Ansprüche, wobei $R_1$, $R_2$, $R_3$, $R_4$ und $R_5$ jeweils unabhängig ausgewählt sind aus $C_{1-6}$-Alkyl.

**10.** Zusammensetzung nach einem der vorhergehenden Ansprüche, wobei das Epoxyäquivalenzgewicht des Präpolymers im Bereich von 450 bis 10.000 liegt.

**11.** Zusammensetzung nach einem der vorhergehenden Ansprüche, wobei das durchschnittliche Molekulargewicht des Präpolymers im Bereich von 2.000 bis 100.000 liegt.

**12.** Zusammensetzung nach einem der vorhergehenden Ansprüche, wobei die gesamte Beschichtungszusammensetzung ein Feststoffgewichtsverhältnis von mindestens 40 % aufweist.

**13.** Kit, umfassend die Antifouling-Farbzusammensetzung nach einem der vorhergehenden Ansprüche, wobei ein erster Behälter den Basisbestandteil enthält und wobei ein zweiter Behälter das Härtungsmittel enthält.

**14.** Kit, umfassend die Antifouling-Farbzusammensetzung nach einem der vorhergehenden Ansprüche 7 bis 12, wobei ein erster Behälter den Basisbestandteil und das Härtungsmittel enthält und wobei ein zweiter Behälter den einen oder die mehreren Beschleuniger enthält.

**15.** Basisbestandteil für eine Antifouling-Farbzusammensetzung, wobei der Bestandteil einen Basisbestandteil umfasst, der ein Epoxyfunktionspräpolymer mit mindestens einer Seitenkette umfasst, die mindestens eine endständige Gruppe der folgenden allgemeinen Formel I aufweist:

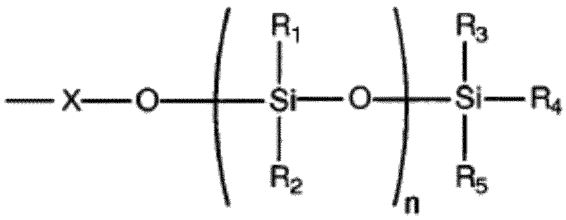

(I)

wobei X eine Carbonylgruppe (>C=0) bezeichnet, n eine ganze Zahl von 0 bis 5.000 ist und $R_1$, $R_2$, $R_3$, $R_4$ und $R_5$ jeweils unabhängig ausgewählt sind aus $C_{1-20}$-Alkyl und wahlweise substituiertem Phenyl, wobei das Epoxyäquivalenzgewicht des Präpolymers im Bereich von 450 bis 10.000 liegt.

**16.** Basisbestandteil nach Anspruch 15, wobei das Präpolymer ein Grundgerüst aufweist, das aus Monomeren vom (Meth)acrylat-Typ besteht.

**17.** Basisbestandteil nach einem der Ansprüche 15 bis 16, wobei die endständige Gruppe der allgemeinen Formel (I) eine endständige Gruppe der allgemeinen Formel (II) ist, wobei $R_3$, $R_4$ und $R_5$ wie in Anspruch 15 definiert sind.

**18.** Zusammensetzung nach einem der Ansprüche 15 bis 17, wobei $R_1$, $R_2$, $R_3$, $R_4$ und $R_5$ jeweils unabhängig ausgewählt sind aus $C_{1-6}$-Alkyl.

**19.** Zusammensetzung nach einem der Ansprüche 15 bis 18, wobei das Epoxyäquivalenzgewicht des Präpolymers im Bereich von 450 bis 10.000 liegt.

**20.** Meeresstruktur, die auf mindestens einem Teil ihrer Oberfläche eine Beschichtung aufweist, die aus der Antifouling-Farbzusammensetzung nach einem der Ansprüche 1 bis 12 hergestellt ist.

**21.** Verfahren zum Beschichten einer Struktur, umfassend die Schritte des Aufbringens auf mindestens einen Teil der Struktur davon einer Schicht einer Antifouling-Beschichtungszusammensetzung nach einem der Ansprüche 1 bis 12.

**Revendications**

**1.** Composition de revêtement anti-salissures autopolissant comprenant :

a. un composant de base comprenant un pré-polymère qui a au moins un groupe fonctionnel époxy et au moins une chaîne latérale portant au moins un groupe terminal de formule générale (I) :

dans laquelle X désigne un groupe carbonyle (>C=O), n est un nombre entier de 0 à 5 000,

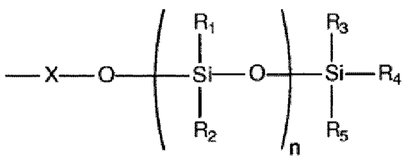

(I)

et $R_1$, $R_2$, $R_3$, $R_4$ et $R_5$ sont chacun indépendamment sélectionnés parmi un groupe alkyle en $C_{1-20}$ et un groupe phényle facultativement substitué ; et

b. un agent de durcissement ayant au moins un hydrogène actif.

**2.** Composition selon la revendication 1, dans laquelle le pré-polymère a un squelette constitué de monomères de type (méth)acrylate.

**3.** Composition selon l'une quelconque des revendications 1 à 2, dans laquelle l'agent de durcissement est sélectionné parmi des amines, telles que des diamines et des polyamines.

**4.** Composition selon la revendication 3, dans laquelle l'amine se trouve sous la forme d'un complexe de trifluorure de bore.

**5.** Composition selon l'une quelconque des revendications 1 à 2, dans laquelle l'agent de durcissement est sélectionné parmi des produits d'addition amine époxy.

**6.** Composition selon l'une quelconque des revendications 1 à 2, dans laquelle l'agent de durcissement est sélectionné parmi des polymercaptans, par exemple des polymercaptans aliphatiques, des polymercaptans cycloaliphatiques, des polymercaptans aromatiques, des polymères à terminaison thiol, en particulier l'agent de durcissement est

sélectionné parmi le pentaérythritol tétrakis (3-mercaptobutylate), le 1,4-bis(3-mercaptobutyryloxy)butane, le 1,3,5-tris(3-mercaptobutyryloxyéthyl-1,3,5-triazine-2,4,6(1H,3H,5H)-trion, le pentaérythritol tétrakis (3-mercaptopropionate), le sel monosodique de 2,4,6-trimercapto-s-triazine, la 2-dibutylamino-4,6-dimercapto-s-triazine, la 2-anilino-4,6-dimercapto-s-triazine, et la 2,4,6-trimercapto-s-triazine.

**7.** Composition selon l'une quelconque des revendications 1 et 6, qui comprend en outre un ou plusieurs accélérateurs, de préférence le ou les accélérateurs sont sélectionnés parmi des amines tertiaires, des composés phosphoreux, des alcools, et des acides organiques, en particulier le ou les accélérateurs sont un composé phosphoreux, par exemple sélectionné parmi des composés phosphoreux tels que la triphényl phosphine, le 1,2-bis(diphénylphosphino)éthane, le chlorure diphénylphosphineux, la tri-o-tolylphosphine, la tri-m-tolylphosphine, la tri-p-tolylphosphine, la tris(p-méthoxyphényl)phosphine, la diphénylcyclohexylphosphine, la tricyclohexylphosphine, la tributylphosphine, la tri-tert-butylphosphine, la tri-n-octylphosphine, le diphénylphosphinostyrène, le 1,3-bis(diphénylphosphino)propane, et le 1,4-bis(diphénylphosphino)butane.

**8.** Composition selon l'une quelconque des revendications précédentes, dans laquelle le groupe terminal de formule générale (I) est un groupe terminal de formule générale (II)

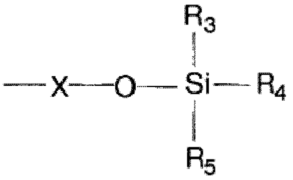

(II)

dans laquelle X, $R_3$, $R_4$ et $R_5$ sont tels que définis dans la revendication 1.

**9.** Composition selon l'une quelconque des revendications précédentes, dans laquelle $R_1$, $R_2$, $R_3$, $R_4$ et $R_5$ sont chacun indépendamment sélectionnés parmi un groupe alkyle en $C_{1-6}$.

**10.** Composition selon l'une quelconque des revendications précédentes, dans laquelle le poids équivalent époxy du pré-polymère se trouve dans la plage de 450 à 10 000.

**11.** Composition selon l'une quelconque des revendications précédentes, dans laquelle la masse molaire moyenne en poids du pré-polymère se trouve dans la plage de 2 000 à 100 000.

**12.** Composition selon l'une quelconque des revendications précédentes, dans laquelle la composition de revêtement totale a un rapport en poids des matières solides d'au moins 40 %.

**13.** Kit comprenant la composition de peinture anti-salissures selon l'une quelconque des revendications précédentes, dans lequel un premier récipient contient le composant de base, et dans lequel un second récipient contient l'agent de durcissement.

**14.** Kit comprenant la composition de peinture anti-salissures selon l'une quelconque des revendications 7 à 12, dans lequel un premier récipient contient le composant de base et l'agent de durcissement, et dans lequel un second récipient contient le ou les accélérateurs.

**15.** Composant de base pour une composition de peinture anti-salissures, ledit composant comprenant un composant de base comprenant un pré-polymère à fonctionnalité époxy ayant au moins une chaîne latérale portant au moins un groupe terminal de formule générale I :

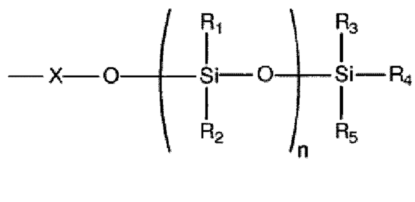

(I)

dans lequel X désigne un groupe carbonyle (>C=0), n est un nombre entier de 0 à 5 000, et $R_1$, $R_2$, $R_3$, $R_4$ et $R_5$

sont chacun indépendamment sélectionnés parmi un groupe alkyle en $C_{1}$-$_{20}$ et un groupe phényle facultativement substitué ;
dans lequel le poids équivalent époxy dudit pré-polymère se trouve dans la plage de 450 à 10 000.

**16.** Composant de base selon la revendication 15, dans lequel le pré-polymère a un squelette constitué de monomères de type (méth)acrylate.

**17.** Composant de base selon l'une quelconque des revendications 15 à 16, dans lequel le groupe terminal de formule générale (I) est un groupe terminal de formule générale (II)

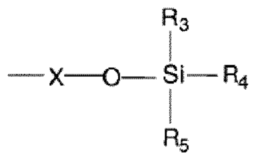

(II)

dans lequel X, $R_3$, $R_4$ et $R_5$ sont tels que définis dans la revendication 15.

**18.** Composition selon l'une quelconque des revendications 15 à 17, dans laquelle $R_1$, $R_2$, $R_3$, $R_4$ et $R_5$ sont chacun indépendamment sélectionnés parmi un groupe alkyle en $C_{1\text{-}6}$.

**19.** Composition selon l'une quelconque des revendications 15 à 18, dans laquelle le poids équivalent époxy du pré-polymère se trouve dans la plage de 450 à 10 000.

**20.** Structure sous-marine ayant sur une moins une partie de sa surface un revêtement préparé à partir de la composition de peinture anti-salissures selon l'une quelconque des revendications 1 à 12.

**21.** Procédé de revêtement d'une structure, comprenant les étapes consistant à appliquer sur au moins une partie de sa structure une couche d'une composition de revêtement anti-salissures selon l'une quelconque des revendications 1 à 12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1641862 B1
- WO 2009100908 A
- JP 2010235792 A
- EP 0297505 B1
- WO 9744401 A
- WO 0077102 A


### Non-patent literature cited in the description


- **CLIVE H. HARE.** Chemistry and Compostion. Technology Publishing Company, 1994